# EUROPEAN PATENT SPECIFICATION

(11) **EP 2 388 573 B1**
(45) Date of publication and mention of the grant of the patent: **20.11.2019**
(21) Application number: 11166879.4
(22) Date of filing: 20.05.2011
(51) Int. Cl.: G01N 21/71, G01N 21/88, B23K 31/12

(54) **Welding system and welding method**
Schweißsystem und -verfahren
Système de soudure et procédé de soudure

(30) Priority: 21.05.2010 JP 2010117584
(43) Date of publication of application: 23.11.2011
(73) Proprietor: Kabushiki Kaisha Toshiba, Tokyo 105-8001 (JP)
(72) Inventor: Miura, Takahiro, Tokyo (JP); Yamamoto, Setsu, Tokyo (JP); Hoshi, Takeshi, Tokyo (JP); Ogawa, Tsuyoshi, Tokyo (JP); Fujita, Yoshihiro, Tokyo (JP); Hirano, Shozo, Tokyo (JP); Watanabe, Kazumi, Tokyo (JP); Nagai, Satoshi, Tokyo (JP); Yoshida, Masahiro, Tokyo (JP); Semboshi, Jun, Tokyo (JP); Asai, Satoru, Tokyo (JP); Ochiai, Makoto, Tokyo (JP)
(74) Representative: Hoffmann Eitle

(56) References cited:
- DE-A1-102005 000 787
- JP-A- H11 101 632
- JP-A- 2001 318 081
- US-A- 5 585 921
- US-A1- 2001 052 264
- US-A1- 2009 134 203
- US-B1- 7 278 315

## Description

### FIELD

The present invention relates to a welding system and method that use a laser ultrasonic technique.

### BACKGROUND

Welding is a technology indispensable for producing a structure and, with recent technological advancement, welding can be made for an object made of a material or having a shape for which it has conventionally been difficult to perform the welding. Meanwhile, when a structure produced with an advanced welding technology is once determined to be a welding defect from inspection results, rewelding thereof often cannot be easily performed. Thus, an impact on the process or cost due to the welding defect tends to be increased. Under such circumstances, importance of an inspection technology (JIS Z3060 :Method for ultrasonic examination for welds of ferritic steel (Non-Patent Document 1), and "Basics of welding technology" edited by Japan Welding Society, published on Dec 20, 1986 (Non-Patent Document 2)) for guaranteeing reliability of a welded structure has been increased more than ever before.

As described above, when the welding defect is determined to have occurred in a technically-difficult welding, such as thick plate welding, from a result of a quality inspection after the welding, cost and construction period required for rewelding significantly increased.

Thus, it is desired that the inspection is performed not after the welding operation, but during the welding operation. According to the inspection result, welding conditions can be changed or rewelding can be fed back extemporarily to the welding process. If this procedure can be realized, it is possible to significantly reduce cost for the rewelding. Further, in the case where the inspection is performed after the welding, if an object to be welded has a large size, there may be a case where more than half a day is required for cooling the object, preventing the inspection from being performed immediately after the welding. Thus, the time taken until the start of the inspection is wasted.

As a method for solving the above problems, a technique in which welding quality is inspected during the welding operation is proposed in Jpn. Pat. Appln. Laid-Open Publication No. 2001-71139 (Patent Document 1) or Jpn. Pat. Appln. Laid-Open Publication No. 2002-71649 (Patent Document 2). However, those systems use a probe that contacts the surface of an object to be welded for transmitting ultrasonic waves to or receiving ultrasonic waves from the object. In those methods, a contact medium, such as glycerin or water, is required so as to allow the ultrasonic probe to contact the surface of the object to be welded, complicating post-processing. Further, in the case where the object to be welded has a high temperature, a special mechanism for preventing damage of the probe is required.

Jpn. Pat. Appln. Laid-Open Publication No. 2007-90435 (Patent Document 3) proposes a system in which an ultrasonic wave generation mechanism is attached to a welding mechanism so as to monitor welding operation. In this system, the ultrasonic probe is not made to contact the object to be welded but is set in a welding apparatus, so that the temperature of the object to be welded need not be taken into consideration. However, in this system, it is necessary to directly set the ultrasonic generation mechanism in the welding mechanism, which requires modification of an existing welding apparatus and limits an applicable welding method to spot welding or its similar method. Thus, in this system, it is difficult to perform versatile welding, such as butt/ groove welding. This is because this system does not directly detect an indication such as reflection echo from an improperly welded part caused in the actual welding, but detects a change in an ultrasonic signal, so that the improperly welded part cannot be identified. Thus, this system is not suitable for repairing a specific part of the welding.

To overcome the above problems, application of a laser ultrasonic technology allowing a non-contact inspection has been attempted. For example, in Jpn. Pat. Appln. Laid-Open Publication No. 2007-57485 (Patent Document 4), a laser ultrasonic method capable of performing measurement in a non-contact manner is employed to allow detection of the welding defect or voids in the welded part. However, the method of Patent Document 4 is based on the assumption that the inspection is performed after completion of the welding and is thus difficult to be applied to an in-process inspection. Although the in-process measurement is proposed in Jpn. Pat. Appln. Laid-Open Publication No. H 11-101632 (Patent Document 5), this measurement is for the thickness of an object to be welded, position of phase change therein, or compositional change therein during welding, not for welding defect inspection. Further, feedback is not performed during welding, so that if the welding defect occurs, the rewelding operation needs to be performed.

Further, Patent Documents 4 and 5 do not describe anything about influence on the state of a laser light irradiated surface which arises as a problem in the laser ultrasonic method. When an object to be welded is overheated at the welding time, the object to be welded becomes oxidized, causing the laser light irradiated surface state to change irregularly. Similarly, the state of the surface of the object to be welded changes by sputter or scatters such as fume at the welding time. Further, Patent Document 4 disclose a technique that irradiates, onto a metal to be welded, the laser light for transmitting ultrasonic waves to or receiving ultrasonic waves from the object. In the welding, such as spot welding, taken as an example in Patent Document 4 in which there is substantially no welding beads formed, reduction or change in sensitivity at the time of transmission/ reception of the ultrasonic waves hardly occurs; on the other hand, the welding beads are formed in the welding in which scanning or multilayer welding is performed, and a minute change in the irregularity or change in the surface state due to the formed beads causes the reduction or change in the sensitivity of the ultrasonic waves. This significantly adversely affects the detection performance in the laser ultrasonic method.

Further, Jpn. Pat. Appln. Laid-Open Publication No. 2007-17298 (Patent Document 6) discloses a technique that uses ultrasonic waves other than a surface wave, such as bottom echo, as a reference signal in measurement using the surface wave. However, for an arrangement in which two probes are disposed astride a welded part or for an object to be inspected having whose bottom surface is not flat and smooth, the bottom echo intensity itself serves as a parameter and thus cannot play a role of the reference signal.

US 5 585 921 A, which discloses the preamble of claims 1 and 15, discloses a laser-ultrasonic non-destructive, non-contacting inspection system, and US 7 278 315 B1 discloses laser-ultrasonic detection of subsurface defects in processed metals.

### BRIEF DESCRIPTION OF THE DRAWINGS

FIG. 1 is a block configuration diagram schematically illustrating a first example of a welding system;
FIG. 2 is a plan view illustrating a positional relationship among a welded part, a transmission laser light irradiation point, a reception laser light irradiation point, and the like in the welding system of FIG. 1;
FIG. 3 is a flowchart illustrating a first example of a welding method performed using the welding system of FIG. 1;
FIG. 4 is a flowchart illustrating a modification of the first example of the welding method performed using the welding system of FIG. 1;
FIG. 5 is a vertical cross-sectional view as viewed in the direction along a welding line, which illustrates a positional relationship among the welded part, the transmission laser light irradiation point, the reception laser light irradiation point, and the like in a modification of the first example of the welding system;
FIG. 6 is a vertical cross-sectional view as viewed in the direction along a welding line, which illustrates a positional relationship among the welded part, the transmission laser light irradiation point, the reception laser light irradiation point, and the like in another modification of the first example of the welding system;
FIG. 7 is a perspective view schematically illustrating a still another modification of the first example of the welding system;
FIG. 8 is a block configuration diagram schematically illustrating a second example of the welding system;
FIG. 9 is a plan view illustrating a positional relationship among the welded part, the transmission laser light irradiation point, the reception laser light irradiation point, a surface modification mechanism, and the like in the welding system of FIG. 8;
FIG. 10 is a vertical cross-sectional view, as viewed in the direction along the welding line, illustrating a portion around a transmission laser light irradiation point before surface modification processing for the object to be welded in the second example of the welding system;
FIG. 11 is a perspective view illustrating the surface modification mechanism and its surrounding portion in the second example of the welding system;
FIG. 12 is a vertical cross-sectional view, as viewed in the direction perpendicular to the welding line, which illustrates the surface modification mechanism and its surrounding portion in an embodiment of the welding system according to the present invention;
FIGS. 13A and 13B are each a graph for representing the effect of the surface modification processing in the embodiment of the welding system according to the present invention, which specifically represents the distribution of intensity of return light with respect to the position in the welding direction, in which FIG. 13A is a graph when the surface modification processing has not been performed, and FIG. 13B is a graph when the surface modification processing has been performed;
FIG. 14 is a plan view illustrating a positional relationship among the welded part, the transmission laser light irradiation point, the reception laser light irradiation point, and the like in a fourth example of the welding system;
FIG. 15 is a perspective view illustrating a positional relationship among the welded part, the transmission laser light irradiation point, the reception laser light irradiation point, and the like in the welding system of FIG. 14;
FIG. 16 is a perspective view schematically illustrating a positional relationship between two-dimensional cross-sections visualized near the welded part which is obtained by the welding system of FIGS. 14 and 15;
FIG. 17 is a perspective view schematically illustrating the position of a three-dimensional region visualized near the welded part which is obtained by the welding system of FIGS. 14 and 15;
FIG. 18 is a perspective view schematically illustrating a situation where data of the visualized two-dimensional cross-sections of FIG. 16 is processed so as to be displayed (projected in a predetermine direction);
FIG. 19 is a view of an actual specific measurement example in which the two-dimensional cross-section data visualized as illustrated in FIG. 18 is projected in the direction perpendicular to the welding direction so as to be displayed, which illustrates a result obtained in the welding system of FIG. 7 (modification of the first example);
FIG. 20 is a block configuration diagram schematically illustrating a fifth example;
FIG. 21 is a block configuration diagram schematically illustrating a sixth example;
FIG. 22 is a block configuration diagram schematically illustrating a seventh embodiment of the welding system according to the present invention;
FIG. 23 is a plan view illustrating the welded part, the transmission laser light irradiation point, the reception laser light irradiation point, an irradiation pattern on the object to be welded, and the like in the welding system of FIG. 22;
FIG. 24 is a perspective view illustrating a protection mechanism and its surrounding portion in an eighth example;
FIG. 25 is a block configuration diagram schematically illustrating a ninth example;
FIG. 26 is a graph illustrating an example a measurement result obtained by the welding system of FIG. 25;
FIG. 27 is a view illustrating an example of the two-dimensional cross-section data obtained by directly processing the measurement result of FIG. 26;
FIG. 28 is a graph illustrating an example of a result obtained by canceling Uref from the measurement result of FIG. 26;
FIG. 29 is a view illustrating an example of the two-dimensional cross-section data obtained from the measurement result of FIG. 28; and
FIG. 30 is a plan view illustrating a positional relationship among the welded part, the transmission laser light irradiation point, the laser light irradiation point for reference signal, the reception laser light irradiation point, the surface modification mechanism, and the like in a tenth example of the welding system.

### DETAILED DESCRIPTION

There is a demand for realizing a real-time inspection with stable transmission/ reception sensitivity during welding even in the case where an object to be welded has a high temperature while reducing influence on a conventional welding apparatus.

The embodiments have been made in view of the above problems, and an object thereof is to provide a welding system capable of performing a real-time inspection with stable transmission/ reception sensitivity during welding even in the case where an object to be welded has a high temperature.

According to an embodiment, there is provided a welding system according to claim 1.

According to another embodiment, there is provided a welding method according to claim 15.

Hereinafter, embodiments will be described with reference to the accompanying drawings. Throughout the drawings, the same reference numerals are used for similar or corresponding elements, and redundant explanation will be omitted.

### [First Example]

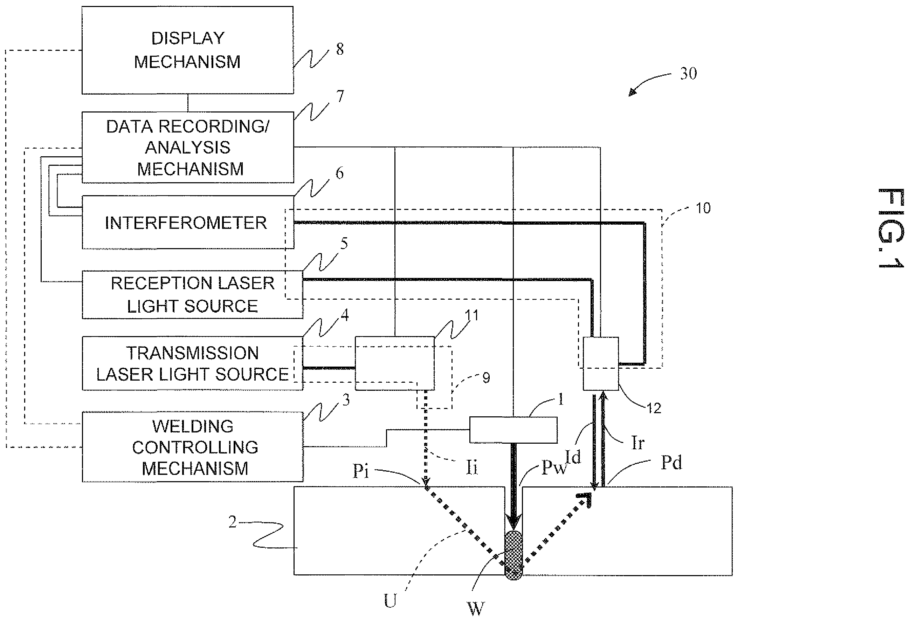

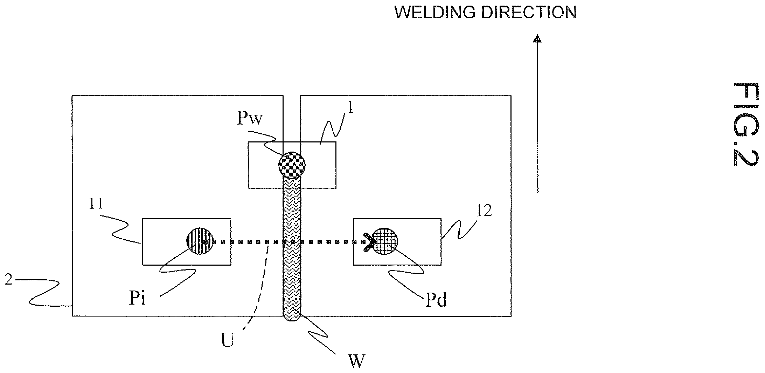

FIG. 1 is a block configuration diagram schematically illustrating a first example of the welding system. FIG. 2 is a plan view illustrating a positional relationship among a welded part, a transmission laser light irradiation point, a reception laser light irradiation point, and the like in the welding system of FIG. 1.

A welding system 30 according to the first example includes a welding mechanism 1 for welding an object (or a work) 2 to be welded and a welding control mechanism 3 for controlling the welding mechanism 1. The object 2 to be welded is constituted by, for example, two flat plates, and end portions of the two flat plates are butted together for multilayer welding. The welding mechanism 1 is designed to be capable of moving relative to the object 2 to be welded along a welding line. That is, the object 2 to be welded may be driven with the welding mechanism 1 fixed, or conversely, the object 2 to be welded may be fixed with the welding mechanism 1 driven.

The welding mechanism 1 may be any type of mechanism that performs, e.g., gas welding, shielded metal arc welding, electroslag welding, thermit welding, submerged arc welding, inert gas arc welding, MAG welding, CO₂ arc welding, electron beam welding, plasma-arc welding, laser welding, or other forms of welding such as fusion welding. Further, the welding mechanism 1 may be a type of mechanism that performs joining (crimping or brazing) other than welding, such as friction-stir bonding.

The welding system 30 further includes a transmission laser light source 4 for irradiating the object 2 to be welded with transmission laser light Ii and a reception laser light source 5 for irradiating the object 2 to be welded with reception laser light Id.

The laser used as the transmission laser light source 4 and the reception laser light source 5 may be, for example, Nd: YAG laser, CO₂ laser, Er: YAG laser, titanium-sapphire laser, alexandrite laser, ruby laser, dye laser, excimer laser, or the like. The laser light source can output either continuous waves or pulse waves and may be used singularly or in multiples. In the case where a plurality of laser light sources are employed, the number of other components required for measuring ultrasonic waves is increased as needed.

The welding system 30 further includes a transmission optical mechanism 9 for transmitting the transmission laser light Ii generated from the transmission laser light source 4 to a given transmission laser light irradiation point Pi on the object 2 to be welded, a transmission optical system drive mechanism 11 for moving the position of the transmission laser light irradiation point Pi, a reception optical mechanism 10 for transmitting the reception laser light Id generated from the reception laser light source 5 to a given reception laser light irradiation point Pd on the object 2 to be welded for irradiation and collecting reflected/ scattered light Ir from the reception laser light irradiation point Pd of the emitted reception laser light Id, and a reception optical system drive mechanism 12 for moving the position of the reception laser light irradiation point Pd.

The transmission optical mechanism 9 and the reception optical mechanism 10 are each constituted by lenses, mirrors, and optical fibers. In particular, in the case where the transmission laser light Ii is irradiated onto the circular transmission laser light irradiation point Pi on the surface of the object 2 to be welded, it is preferable to construct an optical system in which the irradiation diameter at the reception laser light irradiation point Pd falls within a range of from about 0.1 mm to 30 mm. Alternatively, an optical mechanism in which a cylindrical lens is used so as to make the irradiation shape be linear. In this case, it is preferable that the line length falls within a range of from about 1 mm to 100 mm and that the line width falls within a range of about 0.001 mm to 30 mm. The irradiation shape is not limited to one mentioned above.

The transmission laser light irradiation point Pi and the reception laser light irradiation point Pd are located astride a welded part W at the back of a welding point Pw in terms of the welding direction, as illustrated in FIGS. 1 and 2. The transmission optical mechanism 9 and the reception optical mechanism 10 are driven by the transmission optical system drive mechanism 11 and the reception optical system drive mechanism 12, respectively, so as to move, together with the welding mechanism 1, relative to the object 2 to be welded along the welding line.

The welding system 30 further includes an interferometer 6 for performing interference measurement of laser light Ir that has undergone a change from ultrasonic wave U. The interferometer 6 may be a Michelson interferometer, a homodyne interferometer, a heterodyne interferometer, a Fizeau interferometer, a Mach-Zehnder interferometer, a Fabry-Perot interferometer, a photorefractive interferometer, or other laser interferometer. As a method other than the interference measurement, a knife-edge method may be adopted. Any of the above interferometers may be used singularly or in multiples.

The welding system 30 further includes a data recording/ analysis mechanism 7 for recording an ultrasonic signal that has been converted into an electrical signal through the interference measurement so as to perform data analysis. The data recording/ analysis mechanism 7 has a function of recording ultrasonic wave data obtained by the interferometer 6, a function of analyzing the obtained ultrasonic wave data, a function of recording a welding position and a welding condition, a position control function for adjusting the laser light irradiation position, and a function of recording the irradiation position information. It is assumed that the data recording/ analysis mechanism 7 may be one or more mechanisms and that the abovementioned functions are sometimes implemented in a plurality of data recording/ analysis mechanisms 7 in a distributed manner.

The welding system 30 further includes a display mechanism 8 capable of displaying an inspection result obtained by the data recording/ analysis mechanism 7 or welding conditions. The display mechanism 8 has at least one or more functions out of displaying an inspection result, displaying an alarm when it has been determined that there is a problem in the welding quality, urgently stopping the operation through a touch panel interface, comparing a simulation result and real data, and the like.

As the simulation, an ultrasonic wave propagation simulation in which the shape of an object to be welded is simulated is performed, before, during, or after the welding in the case where it is difficult to determine (due to complexity of the shape of the object to be welded) whether an ultrasonic waveform obtained depending on the shape of the object to be welded represents an ultrasonic signal indicating a welding defect or an ultrasonic signal indicating merely the shape of the object to be welded. This can improve accuracy of defect determination in the measurement.

Operation of the first example configured as above will be described. Welding operation is performed at the welding point Pw of the object 2 to be welded to form the welded part W. Simultaneously, the transmission laser light Ii emitted from the transmission laser light source 4 passes through the transmission optical mechanism 9 and is irradiated onto the transmission laser light irradiation point Pi on the surface of the object 2 to be welded. At this time, ultrasonic wave U is generated due to reactive force against heat strain or abrasion of a superficial layer. The ultrasonic wave U generated includes various modes such as a longitudinal wave, a transverse wave, and a surface wave and is hereinafter collectively referred to as ultrasonic wave U. When the generated ultrasonic wave U reaches an improperly welded part or bottom surface of the object to be welded, the propagation path changes due to reflection, scattering, and refraction of the ultrasonic wave U.

Meanwhile, the reception laser light Id emitted from the reception laser light source 5 passes through the reception optical mechanism 10 and is irradiated onto the reception laser light irradiation point Pd on the surface of the object 2 to be welded. At this time, when the ultrasonic wave U reaches the reception laser light irradiation point Pd, the reception laser light Id undergoes amplitude modulation or phase modulation, or a change in the reflection angle and reflected as the laser light Ir containing an ultrasonic signal component.

The laser light Ir having the ultrasonic signal is collected once again by the reception optical mechanism 10 and then transmitted to the interferometer 6. The optical signal having the ultrasonic component is converted into an electrical signal by interferometer 6 and then stored as the ultrasonic wave data by the data recording/ analysis mechanism 7. The data recording/ analysis mechanism 7 can apply averaging processing, moving average processing, filtering, FFT (Fast Fourier Transform), wavelet transformation, aperture synthesis processing, and other signal processing to the obtained ultrasonic signal. Further, the ultrasonic signal can be corrected using welding position information, irradiation position information, temperature information, and the like.

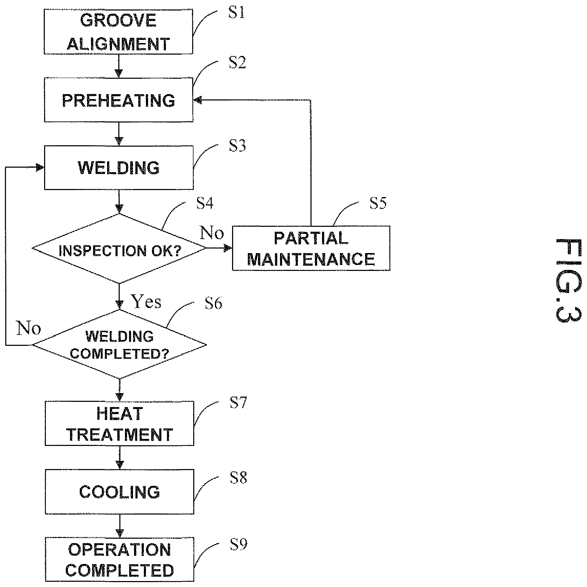

According to the present example, it is possible to perform an in-process welding inspection. A procedure of a welding method using the welding system according to the present example will be described using FIG. 3. FIG. 3 is a flowchart illustrating an example of a welding method performed using the welding system.

As illustrated in FIG. 3, grooves are aligned (step S1), the object to be welded is preheated (step S2), and then welding is performed (step S3). In parallel, the welding inspection is performed (step S4). When a problem arises as a result of the welding inspection, partial maintenance and repair, such as elimination or melting of the welded part is made (step S5), followed by the preheating (step S2) and welding processes (step S3) once again. In the case where the welding is completed without any problem in the result of the welding inspection (step S4), the welding is ended (step S6). After the end of the welding, the object to be welded is heated (step S7) and then cooled (step S8), whereby the entire operation is completed (step S9).

A determination of presence/ absence of the welding defect in the welding inspection (step S4) may be made automatically by the data recording/ analysis mechanism 7 based on the analysis result (for example, based on a threshold value on the ultrasonic signal, based on a comparison between a simulation result and real data, etc.) or made by an operator based on the display on the display mechanism 8.

In the partial maintenance and repair process (step S5), the welding position may be set back to a location before the improperly welded part once during the welding operation for rewelding, or only the improperly welded part may be subjected to the rewelding after a series of the welding processing is ended.

Further, during or after the partial maintenance and repair process (step S5), welding conditions may be altered so as not to cause the welding defect to occur.

As described above, in this process flow, the inspection is performed during the welding and, in the case where the welding defect is detected from the inspection result, only the improperly welded part is subjected to maintenance and repair followed by another welding.

In a conventional process flow, the inspection can be performed only after the completion of the welding and application of heat treatment/ cooling treatment and, thus, in the case where the number of welding passes is large, the time required until the inspection starts becomes enormous. In addition, execution of the reprocessing becomes a major burden. On the other hand, according to the present embodiment, the inspection can be performed for each welding pass or after completion of a specified number of welding passes, so that if the welding defect occurs, the burden of the reprocessing for rewelding is small. Further, a configuration may be possible in which it can be determined that there is no problem in terms of structural strength although the welding defect occurs. Further, the inspection can be performed not only for a hardened state after the welding but also for a state of melting.

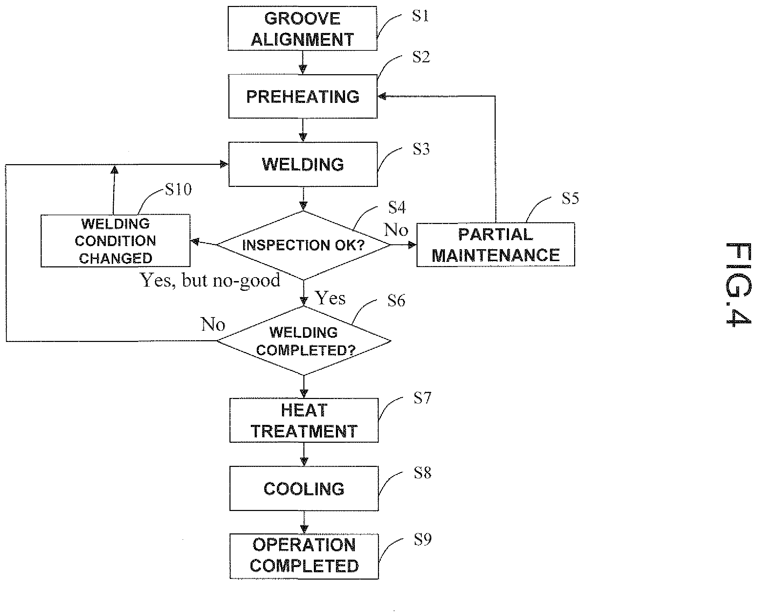

FIG. 4 is a flowchart illustrating another example of the welding method performed using the welding system according to the first example. The example of a process flow of FIG. 4 illustrates the following case: A minor welding defect is detected as a result of the welding inspection (step S4); The partial maintenance and repair (step S5) for the welded part is not performed since the detected welding defect is tolerable; and welding conditions are changed (step S10) while the welding (step S3) is being continued.

A determination whether the welding defect is tolerable or not is made as follows. That is, when a signal representing the welding defect based on a threshold determination is observed a predetermined number of times or more, or a predetermined time length or more in a predetermined region as a result of the analysis performed by the data recording/ analysis mechanism 7, it is determined that a welding defect exceeding a tolerable range has occurred, while when the signal representing the welding defect is observed less than a predetermined number of times, or less than a predetermined time length or more, it is determined that a welding defect within a tolerable range has occurred.

Also in the welding inspection (step S4) of FIG. 3, when the welding defect is within a tolerable range, the process flow may advance to step S6, while when the welding defect exceeds a tolerable range, the process flow may advance to step S5.

As described above, in the example of the process flow of FIG. 4, the inspection result can be fed back to the welding control mechanism 3 so that the current welding conditions become optimum. Further, since the inspection can be performed not only for a hardened state after the welding but also for a state of melting, it is possible to change the current welding conditions to optimum welding conditions and to set such welding conditions as to eliminate the welding defect in the next welding pass. This makes it possible to reduce the welding operation time and cost even if the welding defect occurs.

As described above, it is possible to perform the inspection in real time during the welding without influencing a conventional welding apparatus and, further, to temporarily stop the welding depending on the inspection result and to feed back the inspection result to the current welding conditions.

The process flow of FIG. 4 may be altered such that the welding conditions are changed during or after the partial maintenance and repair (step S5).

Further, the process flows of FIGS. 3 and 4 may be altered such that it is determined in the partial maintenance and repair (step S5) whether the preheating needs to be performed or not after the partial maintenance and repair and, when it is determined that the preheating is not necessary, the welding process (step S3) is performed skipping the preheating (step S2).

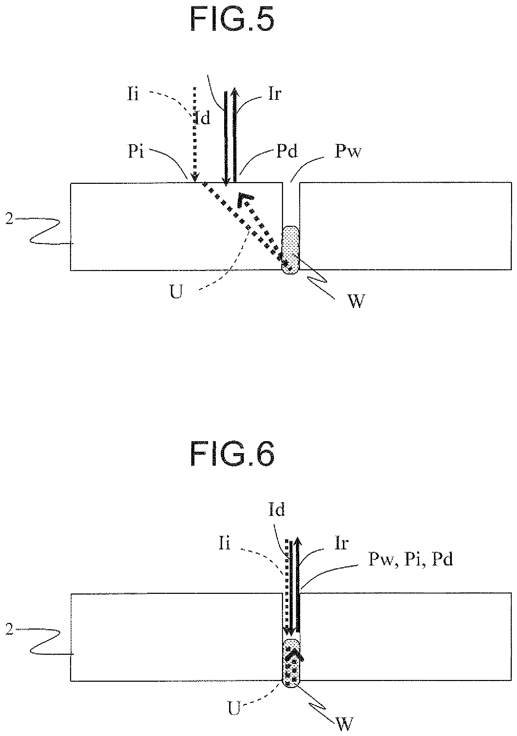

Although the transmission laser light irradiation point Pi and the reception laser light irradiation point Pd are located astride the welded part W in the first example, the present invention is not limited to the above positional relationship. FIGS. 5 and 6 each illustrate a modification in terms of the positional relationship between the transmission laser light irradiation point Pi and the reception laser light irradiation point Pd. More specifically, FIGS. 5 and 6 are each a vertical cross-sectional view as viewed in the direction along the welding line, which illustrates a positional relationship among the welded part, the transmission laser light irradiation point, the reception laser light irradiation point, and the like in the modification of the first example.

In the example of FIG. 5, both the transmission laser light irradiation point Pi and the reception laser light irradiation point Pd are located on one side of the welded part W. In the example of FIG. 6, both the transmission laser light irradiation point Pi and the reception laser light irradiation point Pd are located at the welded part W.

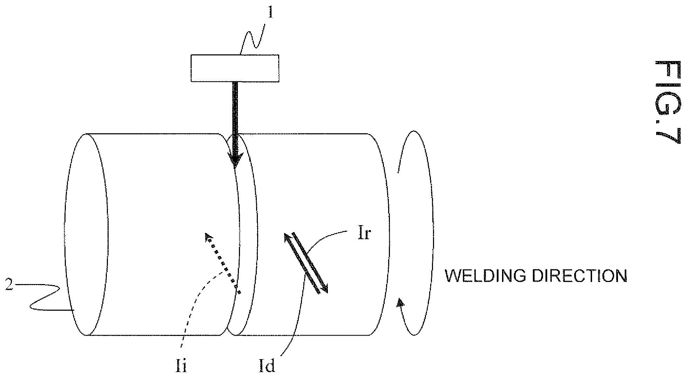

Although the object 2 to be welded is constituted by two flat plates in the first embodiment, the present invention is not limited to this. For example, as illustrated in a modification of FIG. 7, the object 2 to be welded may be constituted by two coaxial cylinders having the same diameter. In this case, the two cylinders may be arranged in their axial direction for welding. FIG. 7 is a perspective view schematically illustrating the modification of the first example of the welding system.

### [Second Example]

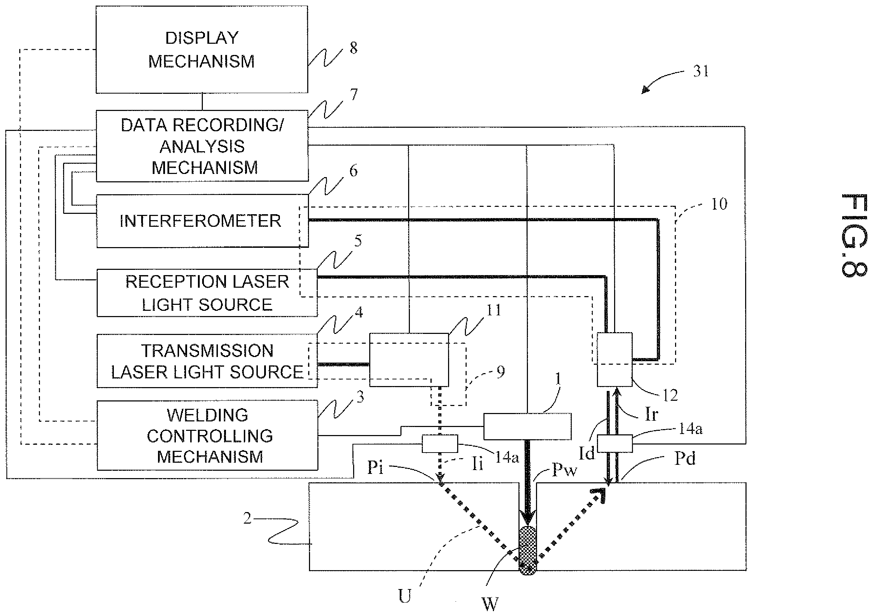

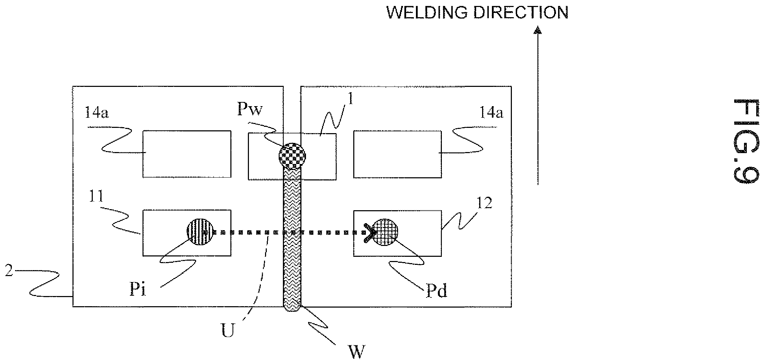

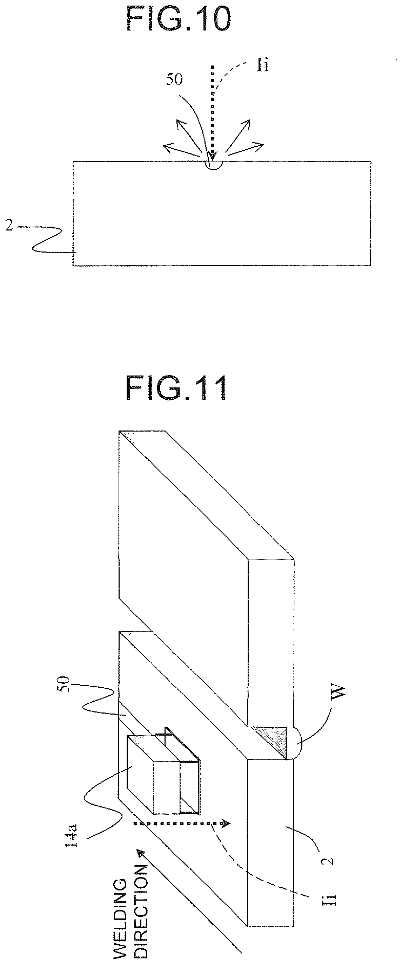

FIG. 8 is a block configuration diagram schematically illustrating a second example of the welding system. FIG. 9 is a plan view illustrating a positional relationship among the welded part, the transmission laser light irradiation point, the reception laser light irradiation point, a surface modification mechanism, and the like in the welding system of FIG. 8. FIG. 10 is a vertical cross-sectional view, as viewed in the direction along the welding line, illustrating a portion around the transmission laser light irradiation point before surface modification processing for the object to be welded in the welding system. FIG. 11 is a perspective view illustrating the surface modification mechanism and its surrounding portion in the welding system.

A welding system 31 according to the present embodiment is a system obtained by adding, as a surface modification mechanism, a grinding mechanism 14a, such as a grinder or wire brush, for grinding the surface. The grinding mechanism 14a is designed to modify the surface of the object 2 to be welded on the near side with respect to the transmission laser light irradiation point Pi and the reception laser light irradiation point Pd in the welding direction.

When the transmission laser light Ii is irradiated onto the transmission laser light irradiation point Pi on the surface of the object 2 to be welded, if the transmission laser light Ii has intensive energy, the surface is abraded. Therefore, as illustrated in FIG. 10, a phenomenon occurs in which a groove 50 is formed in the superficial layer by the transmission laser light Ii. Since the welding is performed a plurality of times along the same pass in the case of the multilayer welding, the transmission laser light Ii is irradiated onto the groove 50 in the welding operation for second and subsequent layers. Although the depth of the groove 50 is generally about several tens of µm to several hundreds of µm at a maximum, the amplitude or frequency characteristics of excited ultrasonic wave U gradually degrade to reduce excitation efficiency. In order to cope with this, as illustrated in FIG. 11, the deformed part on the surface of the object 2 to be welded is removed using a mechanism, such as a grinder, capable of grinding a part of the surface onto which the transmission laser light Ii has been irradiated one or more times so that irradiation of the transmission laser light Ii is performed in a state where the portion around the transmission laser light irradiation point Pi is always flat. As a result, it is possible to prevent a reduction in the excitation efficiency of the ultrasonic wave U, that is, a reduction in the sensitivity. Further, even in the case of single layer welding, even if the state of the surface onto which the transmission laser light Ii is irradiated is poor due to the presence of attachment, a reduction in the sensitivity can be prevented by using the grinding mechanism 14a.

Further, application of the similar grinding mechanism 14a to the reception laser light irradiation point Pd prevents the surface of the object 2 to be welded from being oxidized due to preheating for the welding operation or removes attachment such as fume or sputter. As a result, reflectivity at the reception laser light irradiation point Pd is improved to increase the light amount of the laser light Ir. It follows that the sensitivity of an obtained ultrasonic signal is enhanced.

The grinding work using the grinding mechanism 14a may be performed by an examiner or a welding operator before or during the inspection.

### [Embodiment]

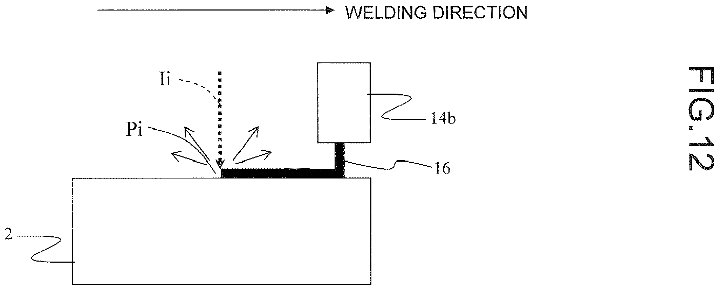

FIG. 12 is a vertical cross-sectional view, as viewed in the direction perpendicular to the welding line, which illustrates the surface modification mechanism and its surrounding portion in the embodiment of the welding system according to the present invention.

The embodiment is a modification of the second example, in which an application mechanism is used as the surface modification mechanism in place of the grinding mechanism of the second example. An application mechanism 14b applies a coating material 16, such as high temperature resistant ink or paint or thin-film metal onto the surface of the object 2 to be welded on the near side with respect to the transmission laser light irradiation point Pi and the reception laser light irradiation point Pd in the welding direction. The coating material 16 may be a material that can withstand high temperature and can be abraded by the transmission laser light Ii, or a material that can withstand high temperature and exhibits high reflectivity with respect to the wavelength of the used reception laser light Id.

The high temperature resistant coating material 16 may be applied automatically by the application mechanism 14b, as well as, applied manually by an examiner or a welding operator before or during the inspection.

In the case where the application mechanism 14b that applies the high temperature resistant ink or paint or thin-film metal is used, not the surface of the object 2 to be welded but the coating material 16 is abraded at the transmission laser light irradiation point Pi (FIG. 12). This is very effective for preventing the object 2 to be welded itself from being damaged by laser irradiation. There may be a case where the intensity of ultrasonic wave generated by the abrasion caused by the applied material is higher than the ultrasonic wave generated by the irradiation of laser light onto the surface of the object to be welded. Therefore, there is a possibility that the sensitivity of the finally obtained ultrasonic signal is enhanced.

Further, with the above application mechanism, the reception sensitivity at the reception laser light irradiation point Pd can be enhanced or a variation in the reception sensitivity thereat can be made constant as the effect of the grinding obtained in the second embodiment. In particular, the reception laser light is strongly influenced by the surface state.

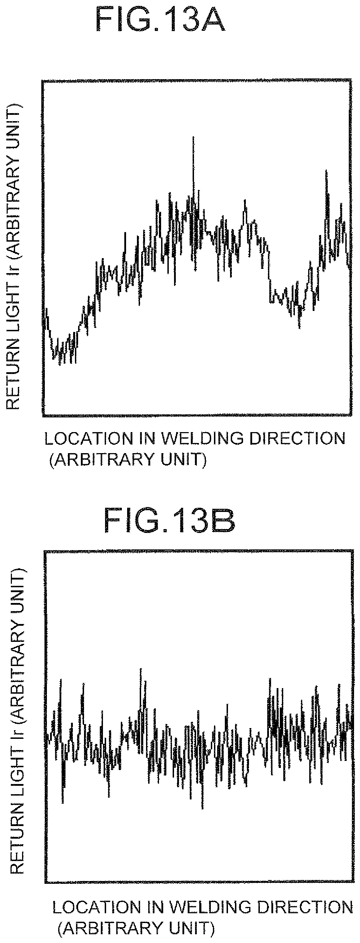

Graphs of specific measurement results representing influence arising as a result of oxidation of the surface which is caused due to temperature increase of the object to be welded are illustrated in FIGS. 13A and 13B. FIGS. 13A and 13B are each a graph for representing the effect of the surface modification processing in the third embodiment, which specifically represents the distribution of intensity of return light with respect to the position in the welding direction. FIG. 13A is a graph when the surface modification processing has not been performed, and FIG. 13B is a graph when the surface modification processing has been performed.

FIGS. 13A and 13B each illustrate a change in the intensity of the laser light Ir which is return light measured when the position of the reception laser light irradiation point Pd moves in the welding direction. As is clear from FIG. 13A which illustrates a case where the surface modification processing has not been performed, the laser light Ir significantly changes in some position. Thus, the reception sensitivity of the ultrasonic wave may significantly change in some inspection position or intensity of the ultrasonic signal may change. This may cause a situation where the sensitivity is saturated in one position and little sensitivity exists in another location. Further, there may occurs a situation where a change in the sensitivity serves as a pseudo signal change and is erroneously determined as a defect signal. Thus, by applying the coating material 16 onto the position of the reception laser light irradiation point Pd, the above sensitivity change can be suppressed. For example, in the case where the coating material 16 is made of a material having a high reflectivity with respect to the wavelength of the laser used, it is possible to increase the light amount of the laser light Ir as in the grinding time and to enhance the sensitivity of an obtained ultrasonic signal.

A result obtained in the case where the coating material 16 has been used is illustrated in FIG. 13B. It can be confirmed that a change in the intensity of the laser light Ir which is return light can be suppressed.

With the configuration of the present embodiment, there can be provided a system capable of preventing a reduction in the sensitivity and providing a high-sensitivity inspection result.

### [Fourth Example]

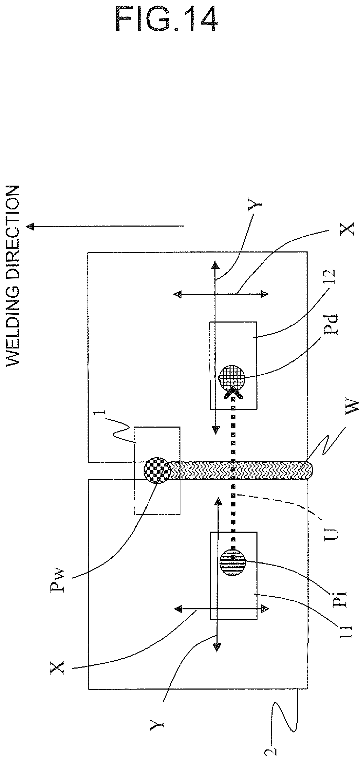

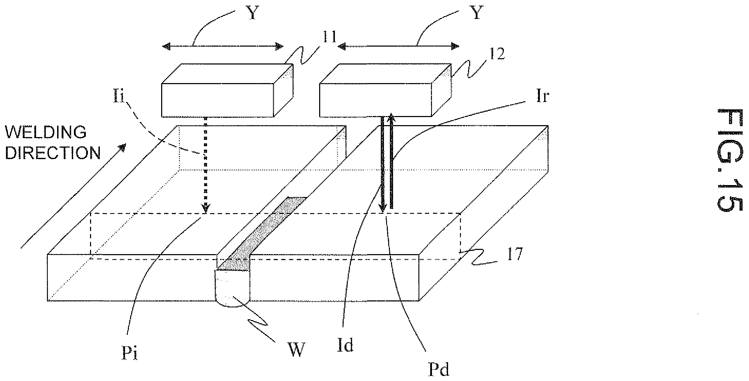

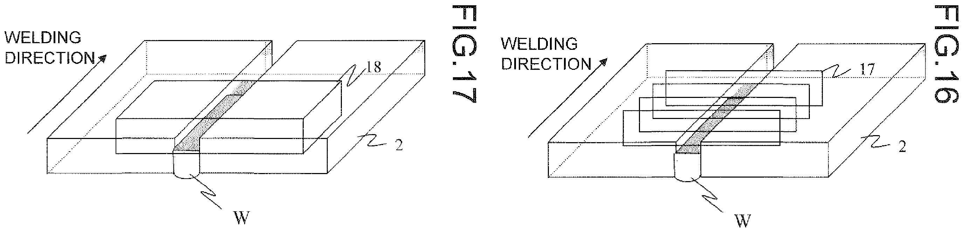

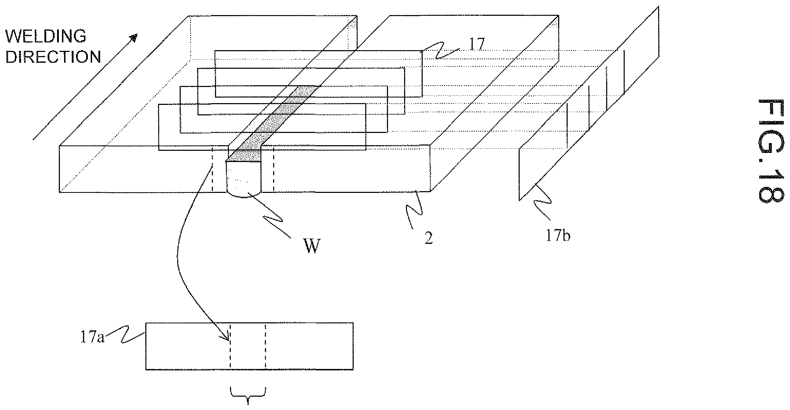

FIG. 14 is a plan view illustrating a positional relationship among the welded part, the transmission laser light irradiation point Pi, the reception laser light irradiation point Pd, and the like in a fourth example of the welding system. FIG. 15 is a perspective view illustrating a positional relationship among the welded part, the transmission laser light irradiation point Pi, the reception laser light irradiation point Pd, and the like in the welding system of FIG. 14. FIG. 16 is a perspective view schematically illustrating a positional relationship between two-dimensional cross-sections visualized near the welded part which is obtained by the welding system of FIGS. 14 and 15. FIG. 17 is a perspective view schematically illustrating the position of a three-dimensional region visualized near the welded part which is obtained by the welding system of FIGS. 14 and 15. FIG. 18 is a perspective view schematically illustrating a situation where data of the visualized two-dimensional cross-sections of FIG. 16 is processed so as to be displayed (projected in a predetermined direction).

The present example is a modification of the first example, in which the positions of the transmission laser light irradiation point Pi and the reception laser light irradiation point Pd are changed by the transmission optical system drive mechanism 11 and the reception optical system drive mechanism 12, respectively.

In the inspection of the welded part W, data recording is performed while moving the transmission optical system drive mechanism 11 and the reception optical system drive mechanism 12 generally in the direction parallel to the welding direction, i.e., X-direction in FIG. 14, and inspection results such as A-scan, B-scan, C-scan, and D-scan are displayed for determination of presence/ absence of the defect. The A-scan, B-scan, ···, etc., are terms used in the field of ultrasonic technology. For example, the A-scan is waveform data defined by a time axis and an ultrasonic amplitude axis, and B-scan displays waveform data with the number of elements (or positions of elements) plotted on one axis and ultrasonic amplitude (or brightness value change) plotted on the other axis. Details are described in, e.g., "Nondestructive Inspection Technique Series - Ultrasonic Testing III" published by the Japanese Society for Non-Destructive Inspection.

When operation of moving the transmission optical system drive mechanism 11 and the reception optical system drive mechanism 12 in the direction perpendicular to the welding direction, i.e., Y-direction in FIGS. 14 and 15 is conducted, inspection of a region of a two-dimensional cross-section 17 illustrated in FIGS. 15 and 16 or a portion of the region of the two-dimensional cross-section 17 that is near the welded part can be visualized by the aperture synthesis processing.

The aperture synthesis is a technique that synthesizes data obtained by receivers at a plurality of positions so as to increase the resolution power and is used in general in an aperture synthesis radar.

A three-dimensional region 18 illustrated in FIG. 17 can also be visualized by the aperture synthesis processing.

Further, as illustrated in FIG. 18, a configuration may be possible in which a part of the visualized region of the two-dimensional cross-section 17 obtained as illustrated in FIG. 16 is subjected to signal processing such as maximum value detection processing or averaging processing and then projected in the welding direction so as to be displayed as a two-dimensional cross-section 17a. Similarly, a part of the visualized region of the two-dimensional cross-section 17 may be projected in the direction perpendicular to the welding direction so as to be displayed as a two-dimensional cross-section 17b.

The inspection can be performed during the welding operation with the results obtained by the above processing displayed on the display mechanism 8 (refer to, e.g., FIG. 1). This processing is a technique capable of significantly enhancing the detection sensitivity of the ultrasonic wave. With the above configuration, there can be provided a system capable of preventing a reduction in the sensitivity and providing a high-sensitivity inspection result.

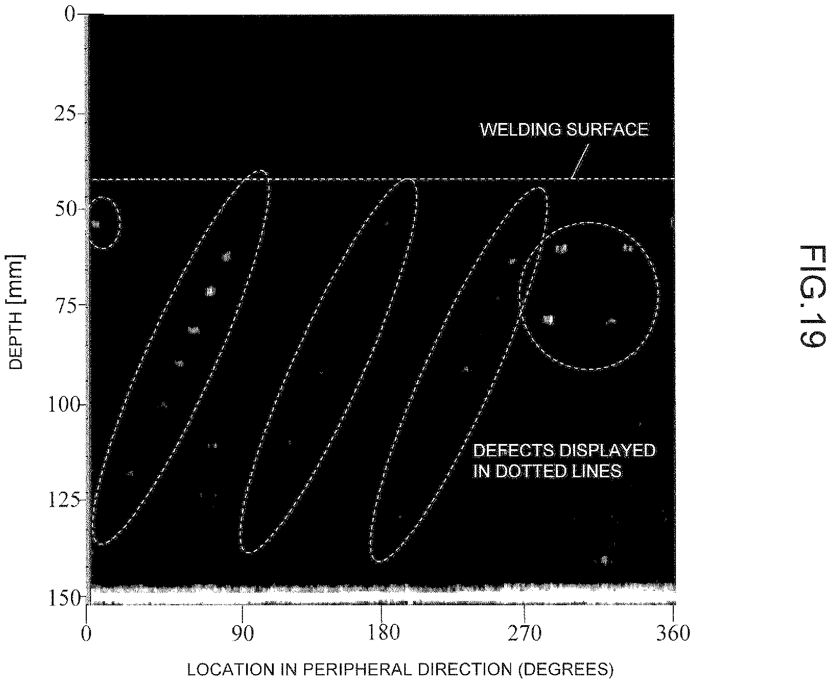

A specific display example of the two-dimensional cross-section 17b projected in the direction perpendicular to the welding direction is illustrated in FIG. 19. FIG. 19 is a view of an actual specific measurement example in which the two-dimensional cross-section data visualized as illustrated in FIG. 18 is projected in the direction perpendicular to the welding direction so as to be displayed, which illustrates a result obtained in the welding system of FIG. 7 (modification of the first example). More specifically, FIG. 19 illustrates a measurement result of the two-dimensional cross-section 17b of FIG. 18 in the case where the object 2 to be welded having a cylindrical shape of 150 mm thickness and about 425 mm diameter is welded in the system of FIG. 7. The temperature of the object 2 to be welded is about 200 °C. A mechanism for intentionally generating a welding defect is given to the object 2 to be welded, and measurement is performed while the welding operation is performed from the surface to the 40 mm depth.

As can be confirmed in FIG. 19, a defect indication can be seen with high brightness. As described above, according to the present embodiment, it is possible to inspect presence/ absence of a welding defect in real time during the welding operation with stable transmission/ reception sensitivity during welding even in the case where an object to be welded has a high temperature while reducing influence on a conventional welding apparatus. Further, it is possible to temporarily stop the welding depending on the inspection result and to feed back the inspection result to the current welding conditions.

### [Fifth Example]

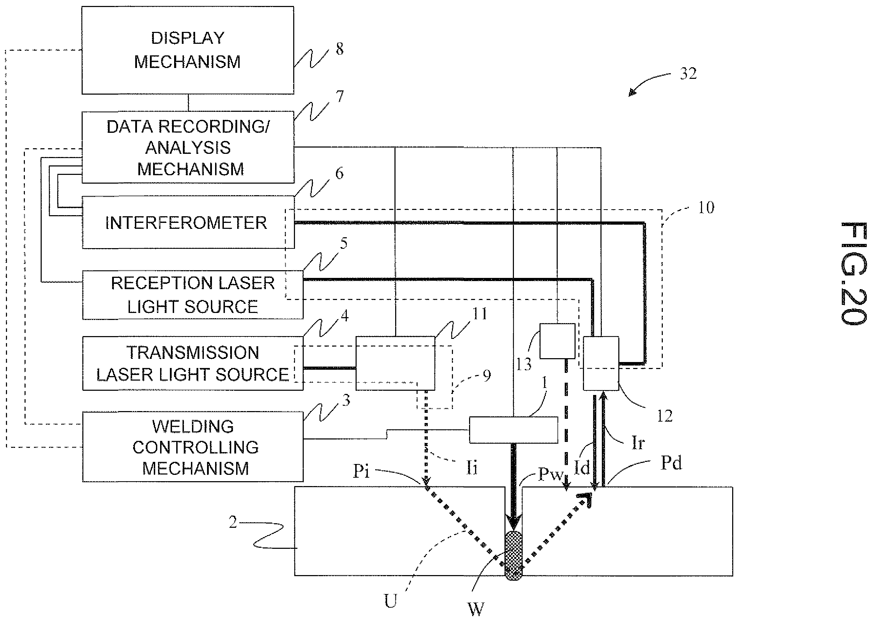

FIG. 20 is a block configuration diagram schematically illustrating a fifth example of the welding system.

A welding system 32 according to the present embodiment is a modification of the first embodiment and is featured in that a temperature measurement mechanism 13 for measuring the temperature of the object 2 to be welded is added to the first embodiment. The temperature measurement mechanism 13 may be, e.g., a non-contact radiation thermometer, a contact resistance thermometer, a thermistor, a thermocouple, or a technique for measuring the temperature according to other principles. Further, the number of the temperature measurement mechanisms 13 provided may be one or more. The temperature measurement mechanism 13 is preferably installed on the propagation path of the ultrasonic wave U or a portion near the propagation path.

According to the fifth example, the sound velocity of an obtained ultrasonic signal can be corrected with respect to the temperature. In general, the sound velocity of the ultrasonic wave depends on the temperature. Therefore, there occurs an error when the welding defect position is calculated from the detected ultrasonic signal. Similarly, there occurs an error when signal processing using ultrasonic signal transmission/ reception position information, such as the aperture synthesis processing, is performed. In order to prevent this, the temperature of the object 2 to be welded at the inspection time is measured, and a previously prepared calibration formula, etc., for adjusting a change in the sound velocity due to a temperature change is used to correct the sound velocity. With this configuration, it is possible to reduce an error due to the temperature change. As described above, according to the fifth example, it is possible to perform welding operation in which the ultrasonic inspection can be performed under a high temperature environment.

### [Sixth Example]

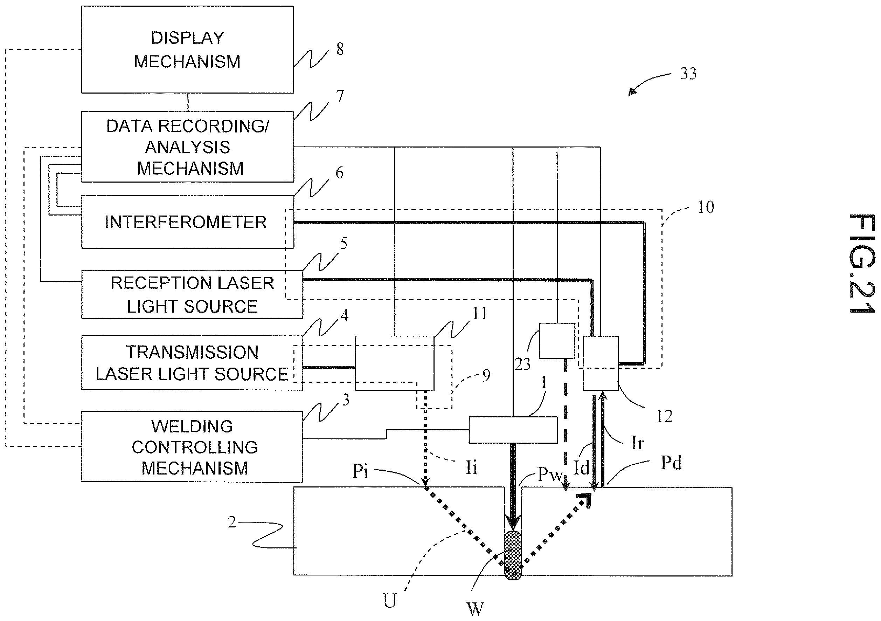

FIG. 21 is a block configuration diagram schematically illustrating a sixth example of the welding system.

A welding system 33 according to the present example is a modification of the first example and is featured in that a distance measurement mechanism 23 for continuously measuring both or one of a distance between the transmission optical mechanism 9 and the object 2 to be welded and a distance between the reception optical mechanism 10 and the object 2 to be welded is added to the first example.

When the distance between the transmission optical mechanism 9 and the object 2 to be welded or the distance between the reception optical mechanism 10 and the object 2 to be welded is changed during the welding due to scan accuracy of the welding mechanism 1, due to deformation of the object to be welded that has undergone the welding or due to the inherent shape of the object to be welded, the collection efficiency of the laser light Ir containing the ultrasonic signal may be degraded. Further, the above change in the distance may cause a change in the irradiation spot diameter of the transmission laser light Ii or the reception laser light Id or a change in the position of the transmission laser light irradiation point Pi or the reception laser light irradiation point Pd. This incurs a reduction in the excitation efficiency of the ultrasonic wave to be generated, a reduction in the reception sensitivity, or error in the correction processing using the position information which is performed at the time of the signal processing such as the aperture synthesis processing, which constitutes a factor adversely affecting the sensitivity.

According to the present example, the distance change is measured by using the distance measurement mechanism 23, and the measurement results are fed back to the transmission optical system drive mechanism 11 and the reception optical system drive mechanism 12, respectively, so as to adjust the distances to optimum values, whereby a reduction in the sensitivity can be prevented. In the case where the laser light Ir containing the ultrasonic signal is collected, the distance change may reduce the sensitivity. In order to prevent this, the distance change amount is measured, and the measurement result is fed back to the optical path adjustment function so as to ensure an optimum irradiation distance. According to the present example, there can be provided a system capable of preventing a reduction in the sensitivity and providing a high-sensitivity inspection result.

### [Seventh Example]

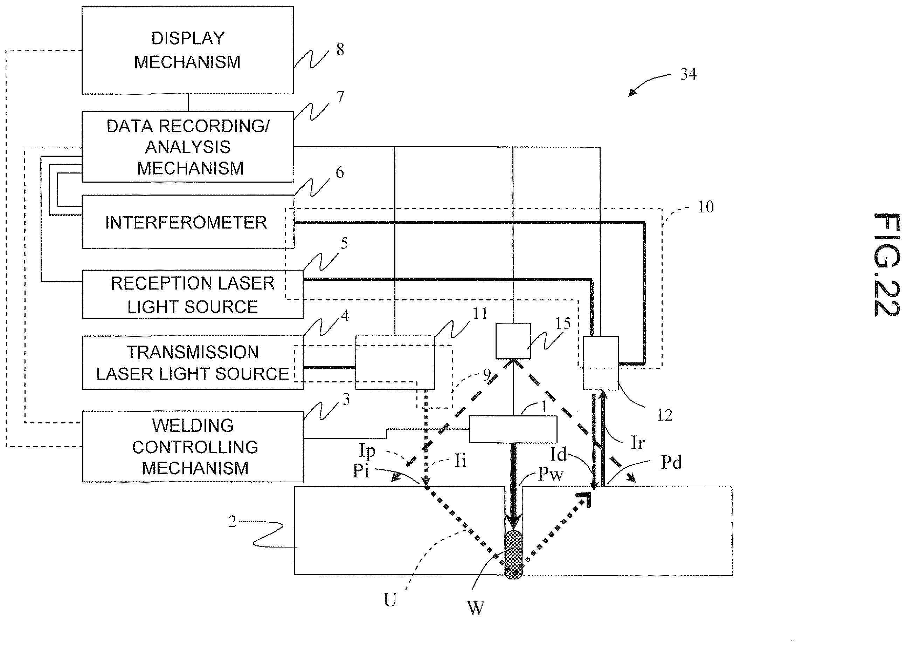

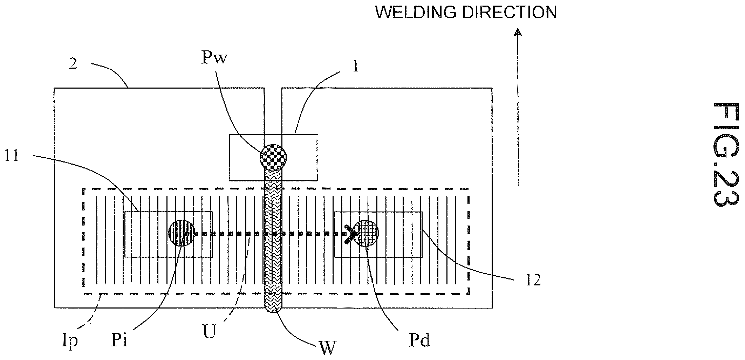

FIG. 22 is a block configuration diagram schematically illustrating a seventh example of the welding system. FIG. 23 is a plan view illustrating the welded part, the transmission laser light irradiation point Pi, the reception laser light irradiation point Pd, an irradiation pattern on the object to be welded, and the like in the welding system of FIG. 22.

A welding system 34 according to the present example is a modification of the first example and is featured in that a pattern projection mechanism 15 is added to the first example.

The pattern projection mechanism 15 projects a pattern Ip on the surface of the object 2 to be welded using one or a combination of a laser light source, an optical lens, a mirror, a slit, and a diffraction grating, or other methods. Although the pattern Ip to be projected may be a lattice shape or a pattern in which a plurality of lines are arranged in FIG. 23, the present invention is not limited to this. For example, the pattern Ip may be a lattice shape or a pattern in which dots are arranged in one dimension or in two dimensions, or irradiated points may be arranged onto the optimum locations of the transmission laser light irradiation point Pi and the reception laser light irradiation point Pd. Of course, other patterns can be adopted.

Since the object 2 to be welded has a high temperature, it is difficult for an operator to access the object 2 to be welded, or even if he or she can access the object 2 to be welded, there may be a danger of doing so. In the case where non-visible laser light whose wavelength falls outside the visible light wave region is used so as to confirm the transmission/ reception positions of the ultrasonic wave, visible light laser serving as guide light is made to enter the laser irradiation path in a coaxial manner with respect to it, in general. In any of the cases where the laser light itself is visible and where the guide light is used to make the laser light visible, the laser irradiation point can be observed on the surface of the object to be welded.

In the case where the positions of the transmission laser light irradiation point Pi and the reception laser light irradiation point Pd are measured, the distance from the groove of the object 2 to be welded and the distance between the transmission laser light irradiation point Pi and the reception laser light irradiation point Pd are measured using a ruler or the like. However, as described above, this involves danger when the object to be welded has a high temperature. Thus, by irradiating the pattern Ip serving as a guide at the time when the positions of the transmission laser light irradiation point Pi and the reception laser light irradiation point Pd are measured, the position measurement can be facilitated, and the obtained measurement results can be used for adjusting the positions of the transmission laser light irradiation point Pi and the reception laser light irradiation point Pd or can be used in data analysis. As described above, the configuration of the present example allows the ultrasonic inspection to be performed under a high temperature environment.

When an infrared camera is used, the pattern Ip need not always be made visible.

### [Eighth Example]

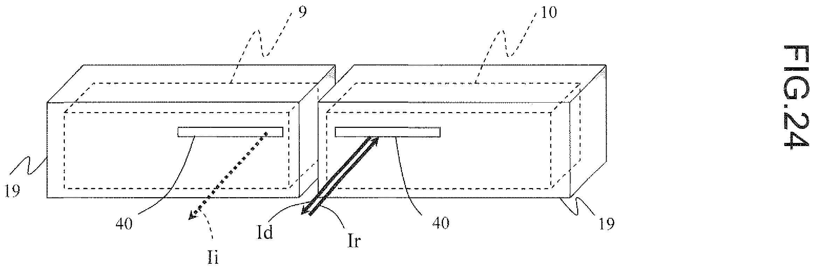

FIG. 24 is a perspective view illustrating a protection mechanism and its surrounding portion in an eighth example of the welding system. The present example is a modification of, e.g., the first example and is featured in that the transmission optical mechanism 9 and the reception optical mechanism 10 are covered by a heat-resistant protection mechanism 19.

The protection mechanism 19 has an aperture 40 through which the transmission laser light Ii, the reception laser light Id, and the reflected/ scattered light Ir are passed.

The welding is often performed under a dusty environment since fume or sputter is generated during the welding operation. Thus, there may be a case where the dust adversely affects an optical mechanism to reduce the sensitivity or make the apparatus unstable and, in the worst-case scenario, the apparatus breaks down. Meanwhile, the high temperature of the object 2 to be welded may give damage to the optical mechanisms 9 and 10. Thus, the heat resistant protection mechanism 19 for protecting the optical mechanism from the dust is provided and, whereby, the above adverse affects can be prevented. According to the present example, there can be provided a system capable of preventing a reduction in the sensitivity and providing a high-sensitivity inspection result.

### [Ninth Example]

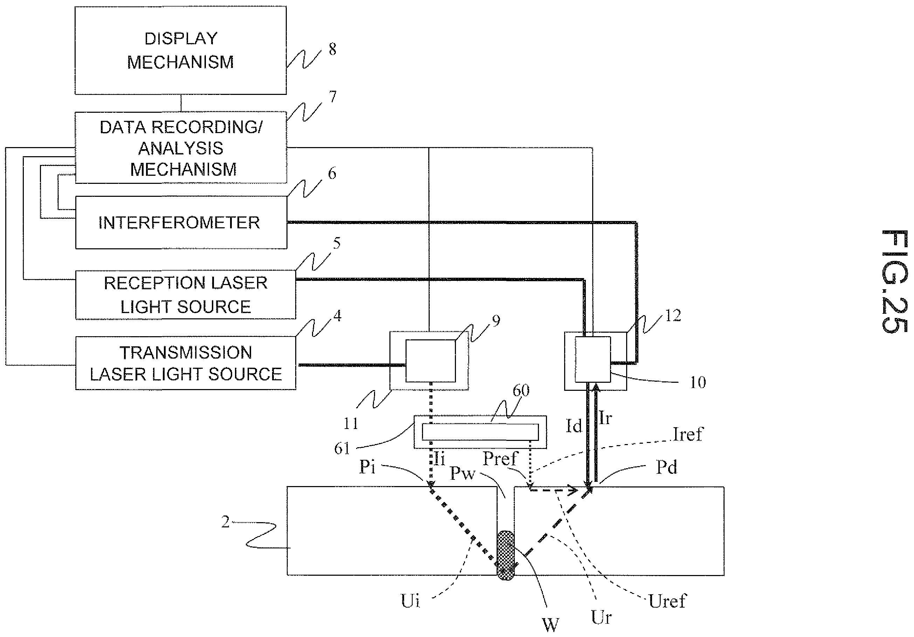

FIG. 25 is a block configuration diagram schematically illustrating a ninth example of the welding system.

The present example is a modification of the first example and differs from the first example in that an optical mechanism 60 for reference signal and an optical system drive mechanism 61 for reference signal are newly provided. In FIG. 25, the welding mechanism 1, welding control mechanism 3, and their associated signal lines are omitted that are shown in FIG. 1.

The optical mechanism 60 for reference signal generates laser light Iref for reference signal from a part of the transmission laser light Ii emitted from the transmission laser light source 4 and transmits the generated laser light Iref for reference signal to a laser irradiation point Pref for reference signal on the surface of the object 2 to be welded. The laser irradiation point Pref for reference signal is disposed at a different position from the transmission laser light irradiation point Pi and from the reception laser light irradiation point Pd. It is preferable that the reception laser light irradiation point Pd and the laser irradiation point Pref for reference signal are disposed on the same side with respect to the welding line and that the transmission laser light irradiation point Pi is disposed on the different side with respect to the welding line from the reception laser light irradiation point Pd and the laser irradiation point Pref for reference signal.

The optical system drive mechanism 61 for reference signal drives the optical mechanism 60 for reference signal and is designed to move, together with the welding mechanism 1 (refer to FIG. 1), in the welding direction relative to the object 2 to be welded in conjunction with the transmission optical system drive mechanism 11 and the reception optical system drive mechanism 12.

The transmission laser light Ii emitted from the transmission laser light source 4 passes through the transmission optical mechanism 9 and is irradiated onto the transmission laser light irradiation point Pi on the surface of the object 2 to be welded. At this time, ultrasonic wave Ui is generated due to reactive force against heat strain or abrasion of a superficial layer. The ultrasonic wave Ui generated includes various modes such as a longitudinal wave, a transverse wave, and a surface wave and is hereinafter collectively referred to as ultrasonic wave Ui. When the generated ultrasonic wave Ui reaches an improperly welded part or bottom surface of the object to be welded, the propagation path changes due to reflection, scattering, and refraction of the ultrasonic wave Ui, and the ultrasonic wave Ui returns from the improperly welded part as response ultrasonic wave Ur. The response ultrasonic wave generated includes various modes such as a longitudinal wave, a transverse wave, and a surface wave and is hereinafter collectively referred to as ultrasonic wave Ur.

Further, the transmission laser light Ii emitted from the transmission laser light source 4 enters the optical mechanism 60 for reference signal. The optical mechanism 60 for reference signal generates laser light Iref for reference signal from a part of the transmission laser light Ii, and the generated laser light Iref for reference signal is irradiated onto the laser irradiation point Pref for reference signal on the surface of the object 2 to be welded. At this time, a reference signal Uref is generated due to reactive force against heat strain or abrasion of a superficial layer. The reference signal Uref generated includes various modes such as a longitudinal wave, a transverse wave, and a surface wave and is hereinafter collectively referred to as reference signal Uref.

Meanwhile, the reception laser light Id emitted from the reception laser light source 5 passes through the reception optical mechanism 10 and is irradiated onto the reception laser light irradiation point Pd on the surface of the object 2 to be welded. At this time, when the ultrasonic waves Ur and Uref reach the reception laser light irradiation point Pd, the reception laser light Id undergoes amplitude modulation or phase modulation, or a change in the reflection angle and reflected as the laser light Ir containing an ultrasonic signal component.

The laser light Ir having the ultrasonic signal is collected once again by the reception optical mechanism 10 and then transmitted to the interferometer 6. The optical signal having the ultrasonic component is converted into an electrical signal by the interferometer 6 and then stored as the ultrasonic wave data by the data recording/ analysis mechanism 7.

The data recording/ analysis mechanism 7 can apply averaging processing, moving average processing, filtering, FFT (Fast Fourier Transform), wavelet transformation, aperture synthesis processing, and other signal processing to the obtained ultrasonic signal. The intensity of the obtained reference signal Uref can be measured using peak detection, integration, RMS, or other detection methods. Further, the ultrasonic signal can be corrected using the signal intensity of the reference signal Uref, welding position information, irradiation position information, temperature information, and the like. Further, a detected defect can be evaluated quantitatively by normalizing the signal intensity after correction and applying the normalized signal intensity to a DAC curve, a DGS diagram, or other calibration curves created by Calibration TP. There may be a case where the reference signal Uref is superimposed in some region to be measured; however, in this case, the reference signal Uref can be canceled as a signal appearing in a known time zone.

Effects of the ninth example will be described. In the abovementioned first example, a separate sound source serving as a reference for quantitative evaluation of the defect is not provided. In this case, a significant fluctuation occurs in a measurement system typified by a laser interferometer, so that although defect detection can be made, the quantitative evaluation thereof is difficult, resulting in failure to make accurate evaluation of the soundness of the welded part. Although it can be considered that a reflected wave from the bottom surface is used, a uniform reflected wave cannot always be obtained due to a difference in the penetration shape, so that accuracy is degraded.

In the ninth example, in addition to the irradiation of the transmission laser light Ii and the reception laser light Id, the laser light Iref for reference signal is irradiated onto the laser irradiation point Pref for reference signal near the reception laser light irradiation point Pd.

The reference signal Uref propagates along the surface of the object 2 to be welded and is received by the reception laser light Id together with the ultrasonic wave Ui. The laser ultrasonic wave is significantly influenced by a fluctuation of a measurement system, especially by fluctuation in the sensitivity of the reception side. Thus, the reception of the reference signal Uref which is excited with a constant intensity and propagates a fixed propagation path makes it possible to quantify a fluctuation on the reception side, and normalization using the intensity of the reference signal Uref allows the fluctuation to be recorrected after the measurement. With this configuration, the signal intensity can be quantitatively represented, thereby allowing quantitative evaluation of the defect to be performed based on a calibration curve such as a DAC curve or a DGS diagram.

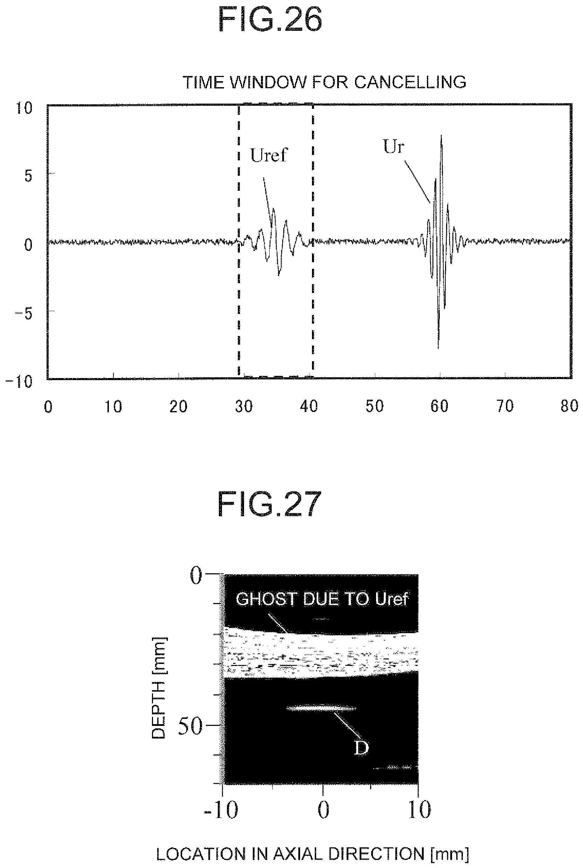

FIG. 26 is a graph illustrating an example a measurement result obtained by the welding system according to the ninth example (FIG. 25). FIG. 27 is a view illustrating an example of the two-dimensional cross-section data obtained by directly processing the measurement result of FIG. 26. As illustrated in FIGS. 26 and 27, in the case where the reference signal Uref is near the measurement region, the reference signal Uref may appear as ghost in the measurement result. Such ghost may cause erroneous detection.

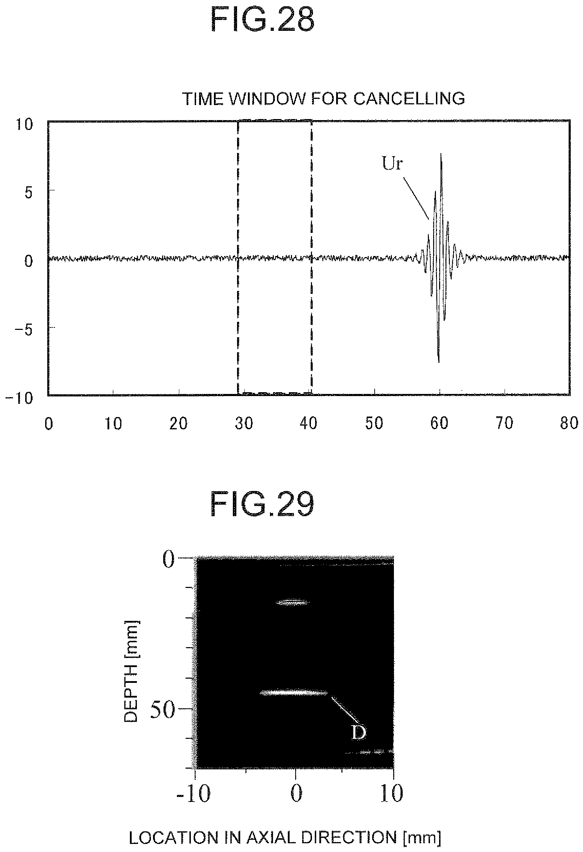

To cope with the ghost of the reference signal Uref appearing in a known time zone, a time frame in which the Uref is canceled is set, whereby the influence of the ghost on the measurement result can be reduced. FIG. 28 is a graph illustrating an example of a result obtained by canceling the Uref from the measurement result of FIG. 26. FIG. 29 is a view illustrating an example of the two-dimensional cross-section data obtained from the measurement result of FIG. 28.

In the above description, the laser light Iref for reference signal is separated from the transmission laser light Ii; alternatively, as a modification, the laser light Iref for reference signal may be generated from a laser light source for reference signal separately provided from the transmission laser light source 4.

### [Tenth Example]

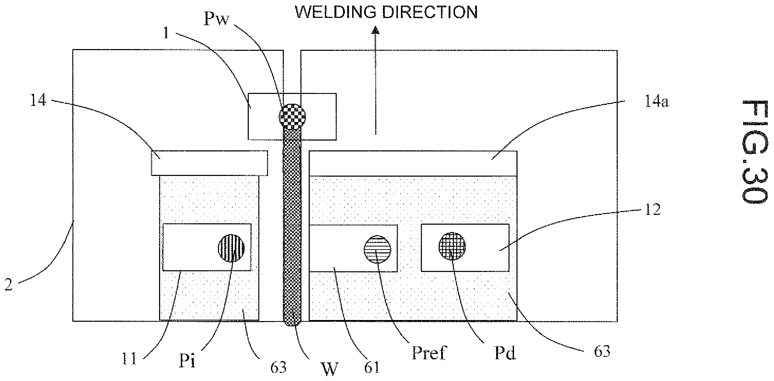

FIG.30 is a plan view illustrating a positional relationship among the welded part, the transmission laser light irradiation point, the laser light irradiation point for reference signal, the reception laser light irradiation point, the surface modification mechanism, and the like in a tenth example of the welding system.

The present example is obtained by adding, to the welding system (refer to FIGS. 8 to 11) according to the second embodiment, the optical mechanism 60 for reference signal and the optical system drive mechanism 61 for reference signal of the welding system (FIG. 25) according to the ninth example.

In the tenth example, the grinding mechanism 14a is provided as a surface modification mechanism, as in the second example, and the shallow grooves on the surface of the object 4 to be welded which are formed by the transmission laser light Ii, the reception laser light Id, and the laser light Iref for reference signal are repaired by the grinding mechanism 14a. Further, as in the case of the ninth embodiment, the reception of the reference signal Uref makes it possible to perform the quantitative evaluation of the defect on the surface of the object 2 to be welded.

### [Other Embodiments]

Although the preferred embodiments of the present invention have been described above, the embodiments are merely illustrative and do not limit the scope of the present invention. These novel embodiments can be practiced in other various forms, and various omissions, substitutions and changes may be made without departing from the scope of the invention. The embodiments and modifications thereof are included in the scope of the present invention in the appended claims.

For example, the features of the embodiments may be combined. More specifically, the surface modification mechanism of the second example and the embodiment may be added to the fourth to eighth examples.

Further, the optical mechanism 60 for reference signal and the optical system drive mechanism 61 for reference signal of the ninth and tenth examples may be applied to the embodiment and fourth to eighth examples.

Although the terms "plan view" and "vertical cross-sectional view" are used in the above description, they are used merely for descriptive purposes, and the vertical or horizontal direction is not especially defined in the present invention.

## Claims

1. A welding system (30) comprising:
a welding mechanism (1) that is configured to weld an object (2) to be welded while moving along a welding line relative to the object to be welded;
a transmission laser light source (4) that is configured to generate transmission laser light (Ii);
a transmission optical mechanism (9) that is configured to transmit, during or after welding operation, the transmission laser light (Ii) generated from the transmission laser light source (4) to surface of the object (2) to be welded for irradiation while moving, together with the welding mechanism (1), relative to the object (2) to be welded so as to generate a transmission ultrasonic wave (U, Ui);
a reception laser light source (5) that is configured to generate reception laser light (Id) for the purpose of detecting a reflected ultrasonic wave (U, Ur) obtained as a result of reflection of the transmission ultrasonic wave (U, Ui);
a reception optical mechanism (10) that is configured to transmit, during or after welding operation, the reception laser light generated from the reception laser light source (5) to the surface of the object (2) to be welded for irradiation while moving, together with the welding mechanism (1), relative to the object (2) to be welded and collects laser light (Ir) scattered/ reflected at the surface of the object (2) to be welded;
an interferometer (6) that is configured to perform interference measurement of the scattered/ reflected laser light (Ir); and
a data recording/ analysis mechanism (7) that is configured to measure and analyze an ultrasonic signal obtained by the interferometer (6), **characterized in that**
the welding system (30) further comprises a surface modification mechanism (14a, 14b) that is configured to enhance sensitivity to at least one of the ultrasonic signal generated on the surface of the object (2) to be welded onto which the transmission laser light (Ii) is irradiated and ultrasonic signal generated on the surface of the object (2) to be welded onto which the reception laser light (Id) is irradiated, and
the surface modification mechanism (14b) is configured to apply a high temperature resistant material (16) onto at least part of the surface of the object (2) to be welded onto to which the transmission laser light (Ii) is irradiated and part of the surface of the object (2) to be welded onto which the reception laser light (Id) is irradiated.

2. The welding system (30) according to claim 1,
wherein
the surface modification mechanism (14a, 14b) is configured to move, together with the welding mechanism (1), relative to the object (2) to be welded and is disposed on the moving direction front side of at least part of the surface of the object (2) onto which the transmission laser light (Ii) is irradiated and part of the surface of the object to be welded onto which the reception laser light (Id) is irradiated.

3. The welding system (30) according to any preceding claim, wherein the data recording/ analysis mechanism (7) is configured to determine occurrence of a welding defect based on an analysis result on an ultrasonic signal, and
the welding system (30) is configured to change the welding conditions when the data recording/ analysis mechanism (7) has determined that the welding defect has occurred.

4. The welding system (30) according to any preceding claim, wherein
the data recording/ analysis mechanism (7) is configured to determine occurrence of a welding defect based on an analysis result on an ultrasonic signal, and
the welding system (30) is configured to carry out partial welding for maintenance and repair for a location at which the welding defect has occurred, when the data recording/ analysis mechanism (7) has determined that the welding defect has occurred.

5. The welding system (30) according to any preceding claim, further comprising an optical system driver (11, 12) that is configured to drive the transmission optical mechanism (9) and the reception optical mechanism (10) such that at least one of the transmission optical mechanism (9) and the reception optical mechanism (10) move along part of the surface of the object (2) to be welded onto which the transmission laser light (Ii) is irradiated and part of the surface of the object (2) to be welded onto which the reception laser light (Id) is irradiated, respectively, relative to the welding mechanism (1) while moving relative to the object (2) to be welded together with the welding mechanism (1).

6. The welding system (30) according to any preceding claim, wherein the data recording/ analysis mechanism (7) is configured to perform aperture synthesis processing based on the ultrasonic signals at a plurality of positions of the transmission optical mechanism (9) and the reception optical mechanism (10).

7. The welding system (30) according to any preceding claim, further comprising a temperature measurement mechanism (13) that is configured to measure the temperature of the object (2) to be welded, wherein
the data recording/ analysis mechanism (7) is configured to correct the velocity of an ultrasonic wave (U) in the object (2) to be welded based on the temperature of the object (2) to be welded obtained by the temperature measurement mechanism (13).

8. The welding system (30) according to any preceding claim, further comprising:
a distance measurement mechanism (23) that is configured to measure a distance between the transmission optical mechanism (9) and the object (2) to be welded and a distance between the reception optical mechanism (10) and the object (2) to be welded;
a distance adjustment mechanism configured to adjust the distance between the transmission optical mechanism and the object to be welded based on the distance measured by the distance measurement mechanism (20).

9. The welding system (30) according to any preceding claim, further comprising a pattern projection mechanism (15) that is configured to project a predetermined pattern (Ip) that can be directly or indirectly visually recognized on the surface of the object (2) to be welded within a predetermined range including position of the object (2) to be welded onto which the transmission laser light (Ii) or the reception laser light (Id) are irradiated.

10. The welding system (30) according to any preceding claim, further comprising a display mechanism (8) that is configured to display in real time a result obtained as a result of recording/ analysis performed by the data recording/ analysis mechanism (7).

11. The welding system (30) according to any preceding claim, wherein the transmission optical mechanism (9) and the reception optical mechanism (10) are covered by a heat-resistant protection mechanism (19) except for a portion through which laser light to be irradiated onto the object (2) to be welded passes and a portion through which laser light to be reflected at the object (2) to be welded passes.

12. The welding system (30) according to any preceding claim, further comprising an optical mechanism for reference signal (60) that is configured to transmit for irradiation laser light for reference signal (Iref) to a laser light irradiation position for reference signal (Pref) on part of the surface of the object (2) to be welded which is different from a transmission laser light irradiation position (Pi) to which the transmission laser light (Ii) is irradiated and a reception laser light irradiation position (Pd) to which the reception laser light (Id) is irradiated while moving, together with the welding mechanism (1), relative to the object (2) to be welded so as to generate an ultrasonic wave for reference signal (Uref), wherein
the laser light to be collected by the reception optical mechanism (9) is laser light that has been subjected to both the modulation given by a reflected ultrasonic wave (Ur) obtained as a result of scattering/ reflection of the transmission ultrasonic wave (Ui) and modulation given by a reflected ultrasonic wave (Uref) obtained as a result of scattering/ reflection of the ultrasonic wave for reference signal (Uref).

13. The welding system according to claim 12, wherein
the optical mechanism for reference signal (60) has a function of generating the laser light for reference signal (Iref) from a part of the transmission laser light (Ii) .

14. The welding system according to claims 12 or 13, wherein
the reception laser light irradiation position (Pd) and the laser irradiation position for reference signal (Pref) are disposed on the same side with respect to the welding line and the transmission laser light irradiation position (Pi) is disposed on a different side with respect to the welding line from the reception laser light irradiation position (Pd) and the laser irradiation position for reference signal (Pref).

15. A welding method that welds an object (2) to be welded while moving a welding mechanism (1) along a welding line relative to the object (2) to be welded, the method comprising:
a transmission ultrasonic wave generation step of irradiating, during or after the welding operation, part of the surface of the object (2) to be welded with transmission laser light (Ii) generated from a transmission laser light source (4) while moving a transmission optical mechanism (9), together with the welding mechanism (1), relative to the object (2) to be welded so as to generate a transmission ultrasonic wave (U, Ui);
a reflected ultrasonic wave detection step of irradiating, during or after the welding operation, part of the surface of the object (2) to be welded with reception laser light (Id) generated from a reception laser light source (5) while moving a reception optical mechanism (10), together with the welding mechanism (1), relative to the object (2) to be welded and collecting laser light (Ir) scattered/ reflected at the surface of the object (2) to be welded so as to detect reflected ultrasonic wave (U, Ur) obtained as a result of reflection of the transmission ultrasonic wave (U, Ui); and
an interference measurement step of performing interference measurement of the scattered/ reflected laser light (Ir) **characterized in that**
the welding method further comprises, before the transmission ultrasonic wave generation step, a surface modification processing step of performing surface modification processing for enhancing the sensitivity to at least one of the ultrasonic signal generated on part of the surface of the object (2) to be welded onto which the transmission laser light (Ii) is irradiated and ultrasonic signal generated on part of the surface of the object (2) to be welded onto which the reception laser light (Id) is irradiated, and
wherein the surface modification processing step comprises applying a high temperature resistant material (16), which can be abraded by the transmission laser light or that exhibits high reflectivity with respect to the wavelength of the used reception laser light, onto at least part of the surface of the object (2) to be welded onto to which the transmission laser light (Ii) is irradiated and part of the surface of the object (2) to be welded onto which the reception laser light (Id) is irradiated.

16. The welding method according to claim 15, further comprising:
a simulation calculation step of performing simulation calculation on welding operation for the object (2) to be welded; and
a display step of displaying a comparison between a result obtained in the simulation calculation step and a result obtained in the interference measurement step.

17. The welding method according to claims 15 or 16, wherein
the transmission ultrasonic wave generation step includes a reference signal generation step of irradiating with laser light for reference signal (Iref), during or after the welding operation, a laser light irradiation position for reference signal (Pref) on the surface of the object (2) to be welded which is different from a transmission laser light irradiation position (Pd) to which the transmission laser light (Ii) is irradiated and a reception laser light irradiation position (Pd) to which the reception laser light (Id) is irradiated while moving an optical mechanism for reference signal (60), together with the welding mechanism (1), relative to the object (2) to be welded so as to generate a reference signal, and
the reflected ultrasonic detection step includes a step of collecting laser light that has been subjected to both modulation given by a reflected ultrasonic wave (Ur) obtained as a result of scattering/ reflection of the transmission ultrasonic wave (Ui) and modulation given by a reflected ultrasonic wave (Uref) obtained as a result of scattering/ reflection of the ultrasonic wave for reference signal (Uref) so as to detect reflected ultrasonic wave (Ur) obtained as a result of reflection of the transmission ultrasonic wave (Ui) s.

18. The welding method according to claim 17, wherein the reference signal generation step includes a step of generating the laser light for reference signal from a part of the transmission laser light generated from a transmission laser light source (4).

19. The welding method according to claim 17 or 18, wherein
the reception laser light irradiation position (Pd) and the laser irradiation position for reference signal (Uref) are disposed on a same side with respect to the welding line, and transmission laser light irradiation position (Pi) is disposed on a different side with respect to the welding line from the reception laser light irradiation position (Pd) and the laser irradiation position for reference signal (Uref).

## Patentansprüche

1. Schweißsystem (30), umfassend:
einen Schweißmechanismus (1), der ausgestaltet ist, ein zu schweißendes Objekt (2) zu schweißen, während er sich entlang einer Schweißlinie in Bezug auf das zu schweißende Objekt bewegt;
eine Sendelaserlichtquelle (4), die ausgestaltet ist, ein Sendelaserlicht (Ii) zu erzeugen;
einen optischen Sendemechanismus (9), der ausgestaltet ist, während oder nach einem Schweißvorgang das Sendelaserlicht (Ii), das von der Sendelaserlichtquelle (4) erzeugt wird, auf eine Oberfläche des zu schweißenden Objekts (2) zur Bestrahlung zu senden, während er sich zusammen mit dem Schweißmechanismus (1) in Bezug auf das zu schweißende Objekt (2) bewegt, um eine Sendeultraschallwelle (U, Ui) zu erzeugen;
eine Empfangslaserlichtquelle (5), die ausgestaltet ist, ein Empfangslaserlicht (Id) zum Zweck eines Erkennens einer reflektierten Ultraschallwelle (U, Ur) zu erzeugen, die als Ergebnis einer Reflexion der Sendeultraschallwelle (U, Ui) erhalten wird;
einen optischen Empfangsmechanismus (10), der ausgestaltet ist, während oder nach einem Schweißvorgang das Empfangslaserlicht, das von der Empfangslaserlichtquelle (5) erzeugt wird, auf die Oberfläche des zu schweißenden Objekts (2) zur Bestrahlung zu senden, während er sich zusammen mit dem Schweißmechanismus (1) in Bezug auf das zu schweißende Objekt (2) bewegt, und der Laserlicht (Ir) sammelt, das an der Oberfläche des zu schweißenden Objekts (2) gestreut/reflektiert wird;
ein Interferometer (6), das ausgestaltet ist, eine Interferenzmessung des gestreuten/reflektierten Laserlichts (Ir) durchzuführen; und
einen Mechanismus zur Datenaufzeichnung/-analyse (7), der ausgestaltet ist, ein Ultraschallsignal, das durch das Interferometer (6) erhalten wird, zu messen und analysieren, **dadurch gekennzeichnet, dass**
das Schweißsystem (30) weiter einen Oberflächenmodifikationsmechanismus (14a, 14b) umfasst, der ausgestaltet ist, die Empfindlichkeit für mindestens eines von dem Ultraschallsignal, das auf der Oberfläche des zu schweißenden Objekts (2) erzeugt wird, auf die das Sendelaserlicht (Ii) gestrahlt wird, und einem Ultraschallsignal, das auf der Oberfläche des zu schweißenden Objekts (2) erzeugt wird, auf die das Empfangslaserlicht (Id) gestrahlt wird, zu verbessern, und
der Oberflächenmodifikationsmechanismus (14b) ausgestaltet ist, ein hochtemperaturbeständiges Material (16) auf mindestens einen Teil der Oberfläche des zu schweißenden Objekts (2), auf die das Sendelaserlicht (Ii) gestrahlt wird, und einen Teil der Oberfläche des zu schweißenden Objekts (2), auf die das Empfangslaserlicht (Id) gestrahlt wird, aufzubringen.

2. Schweißsystem (30) nach Anspruch 1, wobei
der Oberflächenmodifikationsmechanismus (14a, 14b) ausgestaltet ist, sich zusammen mit dem Schweißmechanismus (1) in Bezug auf das zu schweißende Objekt (2) zu bewegen, und auf der Bewegungsrichtung-Vorderseite von mindestens einem Teil der Oberfläche des Objekts (2), auf die das Sendelaserlicht (Ii) gestrahlt wird, und einem Teil der Oberfläche des zu schweißenden Objekts, auf die das Empfangslaserlicht (Id) gestrahlt wird, angeordnet ist.

3. Schweißsystem (30) nach einem beliebigen vorstehenden Anspruch, wobei
der Mechanismus zur Datenaufzeichnung/-analyse (7) ausgestaltet ist, ein Auftreten eines Schweißdefekts basierend auf einem Analyseergebnis an einem Ultraschallsignal zu bestimmen, und
das Schweißsystem (30) ausgestaltet ist, die Schweißbedingungen zu ändern, wenn der Mechanismus zur Datenaufzeichnung/-analyse (7) bestimmt hat, dass der Schweißdefekt aufgetreten ist.

4. Schweißsystem (30) nach einem beliebigen vorstehenden Anspruch, wobei
der Mechanismus zur Datenaufzeichnung/-analyse (7) ausgestaltet ist, ein Auftreten eines Schweißdefekts basierend auf einem Analyseergebnis an einem Ultraschallsignal zu bestimmen, und
das Schweißsystem (30) ausgestaltet ist, eine Teilschweißung zur Wartung und Reparatur für eine Stelle auszuführen, an der der Schweißdefekt aufgetreten ist, wenn der Mechanismus zur Datenaufzeichnung/-analyse (7) bestimmt hat, dass der Schweißdefekt aufgetreten ist.

5. Schweißsystem (30) nach einem beliebigen vorstehenden Anspruch, weiter umfassend einen optischen Systemtreiber (11, 12), der ausgestaltet ist, den optischen Sendemechanismus (9) und den optischen Empfangsmechanismus (10) anzutreiben, so dass sich mindestens einer von dem optischen Sendemechanismus (9) und dem optischen Empfangsmechanismus (10) jeweils entlang eines Teils der Oberfläche des zu schweißenden Objekts (2), auf die das Sendelaserlicht (Ii) gestrahlt wird, und eines Teils der Oberfläche des zu schweißenden Objekts (2), auf die das Empfangslaserlicht (Id) gestrahlt wird, in Bezug auf den Schweißmechanismus (1) bewegt, während er sich in Bezug auf das zu schweißende Objekt (2) zusammen mit dem Schweißmechanismus (1) bewegt.

6. Schweißsystem (30) nach einem beliebigen vorstehenden Anspruch, wobei
der Mechanismus zur Datenaufzeichnung/-analyse (7) ausgestaltet ist, eine Apertursyntheseverarbeitung basierend auf den Ultraschallsignalen an einer Vielzahl von Positionen des optischen Sendemechanismus (9) und des optischen Empfangsmechanismus (10) durchzuführen.

7. Schweißsystem (30) nach einem beliebigen vorstehenden Anspruch, weiter umfassend einen Temperaturmessmechanismus (13), der ausgestaltet ist, die Temperatur des zu schweißenden Objekts (2) zu messen, wobei
der Mechanismus zur Datenaufzeichnung/-analyse (7) ausgestaltet ist, die Geschwindigkeit einer Ultraschallwelle (U) in dem zu schweißenden Objekt (2) basierend auf der Temperatur des zu schweißenden Objekts (2) zu korrigieren, die durch den Temperaturmessmechanismus (13) erhalten wird.

8. Schweißsystem (30) nach einem beliebigen vorstehenden Anspruch, weiter umfassend:
einen Distanzmessmechanismus (23), der ausgestaltet ist, eine Distanz zwischen dem optischen Sendemechanismus (9) und dem zu schweißenden Objekt (2) und eine Distanz zwischen dem optischen Empfangsmechanismus (10) und dem zu schweißenden Objekt (2) zu messen;
einen Distanzeinstellmechanismus, der ausgestaltet ist, die Distanz zwischen dem optischen Sendemechanismus und dem zu schweißenden Objekt basierend auf der Distanz einzustellen, die durch den Distanzmessmechanismus (20) gemessen wird.

9. Schweißsystem (30) nach einem beliebigen vorstehenden Anspruch, weiter umfassend einen Musterprojektionsmechanismus (15), der ausgestaltet ist, ein vorbestimmtes Muster (Ip), das auf der Oberfläche des zu schweißenden Objekts (2) direkt oder indirekt visuell erkannt werden kann, innerhalb eines vorbestimmten Bereichs zu projizieren, der eine Position des zu schweißenden Objekts (2) einschließt, auf die das Sendelaserlicht (Ii) oder das Empfangslaserlicht (Id) gestrahlt werden.

10. Schweißsystem (30) nach einem beliebigen vorstehenden Anspruch, weiter umfassend einen Anzeigemechanismus (8), der ausgestaltet ist, in Echtzeit ein Ergebnis anzuzeigen, das als Ergebnis einer Aufzeichnung/Analyse erhalten wird, die durch den Mechanismus zur Datenaufzeichnung/-analyse (7) durchgeführt wird.

11. Schweißsystem (30) nach einem beliebigen vorstehenden Anspruch, wobei
der optische Sendemechanismus (9) und der optische Empfangsmechanismus (10) durch einen hitzebeständigen Schutzmechanismus (19) abgedeckt werden, mit Ausnahme eines Abschnitts, durch den Laserlicht, das auf das zu schweißende Objekt (2) zu strahlen ist, durchgeht und eines Abschnitts, durch den Laserlicht, das an dem zu schweißenden Objekt (2) zu reflektieren ist, durchgeht.

12. Schweißsystem (30) nach einem beliebigen vorstehenden Anspruch, weiter umfassend einen optischen Mechanismus für ein Referenzsignal (60), der ausgestaltet ist, Laserlicht für ein Referenzsignal (Iref) zu einer Laserlichtbestrahlungsposition für ein Referenzsignal (Pref) auf einem Teil der Oberfläche des zu schweißenden Objekts (2) zur Bestrahlung zu senden, die sich von einer Sendelaserlicht-Bestrahlungsposition (Pi) unterscheidet, zu der das Sendelaserlicht (Ii) gestrahlt wird, und einer Empfangslaserlicht-Bestrahlungsposition (Pd), zu der das Empfangslaserlicht (Id) gestrahlt wird, während er sich zusammen mit dem Schweißmechanismus (1) in Bezug auf das zu schweißende Objekt (2) bewegt, sodass eine Ultraschallwelle für ein Referenzsignal (Uref) erzeugt wird, wobei
das Laserlicht, das vom optischen Empfangsmechanismus (9) zu sammeln ist, Laserlicht ist, das sowohl der Modulation, gegeben durch eine reflektierte Ultraschallwelle (Ur), die als Ergebnis eines Streuens/Reflektierens der Sendeultraschallwelle (Ui) erhalten wird, als auch einer Modulation, gegeben durch eine reflektierte Ultraschallwelle (Uref), die als Ergebnis eines Streuens/Reflektierens der Ultraschallwelle für ein Referenzsignal (Uref) erhalten wird, unterzogen worden ist.

13. Schweißsystem nach Anspruch 12, wobei
der optische Mechanismus für ein Referenzsignal (60) eine Funktion des Erzeugens des Laserlichts für ein Referenzsignal (Iref) aus einem Teil des Sendelaserlichts (Ii) aufweist.

14. Schweißsystem nach Ansprüchen 12 oder 13, wobei
die Empfangslaserlicht-Bestrahlungsposition (Pd) und die Laserbestrahlungsposition für ein Referenzsignal (Pref) auf der gleichen Seite in Bezug auf die Schweißlinie angeordnet sind und die Sendelaserlicht-Bestrahlungsposition (Pi) auf einer anderen Seite in Bezug auf die Schweißlinie als die Empfangslaserlicht-Bestrahlungsposition (Pd) und die Laserbestrahlungsposition für ein Referenzsignal (Pref) angeordnet ist.

15. Schweißverfahren, das ein zu schweißendes Objekt (2) schweißt, während ein Schweißmechanismus (1) entlang einer Schweißlinie in Bezug auf das zu schweißende Objekt (2) bewegt wird, wobei das Verfahren umfasst:
einen Sendeultraschallwellen-Erzeugungsschritt eines Bestrahlens, während oder nach dem Schweißvorgang, eines Teils der Oberfläche des zu schweißenden Objekts (2) mit Sendelaserlicht (Ii), das aus einer Sendelaserlichtquelle (4) erzeugt wird, während ein optischer Sendemechanismus (9) zusammen mit dem Schweißmechanismus (1) in Bezug auf das zu schweißende Objekt (2) bewegt wird, sodass eine Sendeultraschallwelle (U, Ui) erzeugt wird;
ein Erkennungsschritt reflektierter Ultraschallwellen eines Bestrahlens, während oder nach dem Schweißvorgang, eines Teils der Oberfläche des zu schweißenden Objekts (2) mit Empfangslaserlicht (Id), das aus einer Empfangslaserlichtquelle (5) erzeugt wird, während ein optischer Empfangsmechanismus (10) zusammen mit dem Schweißmechanismus (1) in Bezug auf das zu schweißende Objekt (2) bewegt wird und Laserlicht (Ir) gesammelt wird, das an der Oberfläche des zu schweißenden Objekts (2) gestreut/reflektiert wird, sodass eine reflektierte Ultraschallwelle (U, Ur) erkannt wird, die als Ergebnis einer Reflexion der Sendeultraschallwelle (U, Ui) erhalten wird; und
einen Interferenzmessschritt eines Durchführens einer Interferenzmessung des gestreuten/reflektierten Laserlichts (Ir), **dadurch gekennzeichnet, dass**
das Schweißverfahren vor dem Sendeultraschallwellen-Erzeugungsschritt weiter einen Oberflächenmodifikationsverarbeitungsschritt eines Durchführens einer Oberflächenmodifikationsverarbeitung zur Verbesserung der Empfindlichkeit für mindestens eines von dem Ultraschallsignal, das auf einem Teil der Oberfläche des zu schweißenden Objekts (2) erzeugt wird, auf die das Sendelaserlicht (Ii) gestrahlt wird, und einem Ultraschallsignal, das auf einem Teil der Oberfläche des zu schweißenden Objekts (2) erzeugt wird, auf die das Empfangslaserlicht (Id) gestrahlt wird, umfasst, und wobei
der Oberflächenmodifikationsverarbeitungsschritt ein Aufbringen eines hochtemperaturbeständigen Materials (16), das durch das Sendelaserlicht abgetragen werden kann oder das einen hohen Reflexionsgrad in Bezug auf die Wellenlänge des verwendeten Empfangslaserlichts zeigt, auf mindestens einen Teil der Oberfläche des zu schweißenden Objekts (2), auf die das Sendelaserlicht (Ii) gestrahlt wird, und einen Teil der Oberfläche des zu schweißenden Objekts (2), auf die das Empfangslaserlicht (Id) gestrahlt wird, umfasst.

16. Schweißverfahren nach Anspruch 15, weiter umfassend:
einen Simulationsberechnungsschritt eines Durchführens einer Simulationsberechnung an einem Schweißvorgang für das zu schweißende Objekt (2); und
einen Anzeigeschritt eines Anzeigens eines Vergleichs zwischen einem Ergebnis, das im Simulationsberechnungsschritt erhalten wird, und einem Ergebnis, das im Interferenzmessschritt erhalten wird.

17. Schweißverfahren nach Anspruch 15 oder 16, wobei
der Sendeultraschallwellen-Erzeugungsschritt einen Referenzsignalerzeugungsschritt eines Bestrahlens mit Laserlicht für ein Referenzsignal (Iref), während oder nach dem Schweißvorgang, einer Laserlichtbestrahlungsposition für ein Referenzsignal (Pref) auf der Oberfläche des zu schweißenden Objekts (2) einschließt, die sich von einer Sendelaserlicht-Bestrahlungsposition (Pd) unterscheidet, zu der das Sendelaserlicht (Ii) gestrahlt wird, und einer Empfangslaserlicht-Bestrahlungsposition (Pd), zu der das Empfangslaserlicht (Id) gestrahlt wird, während ein optischer Mechanismus für ein Referenzsignal (60) zusammen mit dem Schweißmechanismus (1) in Bezug auf das zu schweißende Objekt (2) bewegt wird, sodass ein Referenzsignal erzeugt wird, und
der Erkennungsschritt reflektierter Ultraschallwellen einen Schritt eines Sammelns von Laserlicht einschließt, das sowohl einer Modulation, gegeben durch eine reflektierte Ultraschallwelle (Ur), die als Ergebnis eines Streuens/Reflektierens der Sendeultraschallwelle (Ui) erhalten wird, als auch einer Modulation, gegeben durch eine reflektierte Ultraschallwelle (Uref), die als Ergebnis eines Streuens/Reflektierens der Ultraschallwelle für ein Referenzsignal (Uref) erhalten wird, unterzogen worden ist, sodass eine reflektierte Ultraschallwelle (Ur) erkannt wird, die als Ergebnis einer Reflexion der Sendeultraschallwelle (Ui) erhalten wird.

18. Schweißverfahren nach Anspruch 17, wobei der Referenzsignalerzeugungsschritt einen Schritt eines Erzeugens des Laserlichts für ein Referenzsignal aus einem Teil des Sendelaserlichts einschließt, das aus einer Sendelaserlichtquelle (4) erzeugt wird.

19. Schweißverfahren nach Anspruch 17 oder 18, wobei
die Empfangslaserlicht-Bestrahlungsposition (Pd) und die Laserbestrahlungsposition für ein Referenzsignal (Uref) auf einer gleichen Seite in Bezug auf die Schweißlinie angeordnet sind und eine Sendelaserlicht-Bestrahlungsposition (Pi) auf einer anderen Seite in Bezug auf die Schweißlinie als die Empfangslaserlicht-Bestrahlungsposition (Pd) und die Laserbestrahlungsposition für ein Referenzsignal (Uref) angeordnet ist.

## Revendications

1. Système de soudure (30) comprenant :
un mécanisme de soudure (1) qui est configuré pour souder un objet (2) à souder tout en se déplaçant le long d'une ligne de soudure par rapport à l'objet à souder ;
une source de lumière laser de transmission (4) qui est configurée pour générer une lumière laser de transmission (Ii) ;
un mécanisme optique de transmission (9) qui est configuré pour transmettre, pendant ou après l'opération de soudure, la lumière laser de transmission (Ii) générée depuis la source de lumière laser de transmission (4) à la surface de l'objet (2) à souder pour l'irradiation tout en se déplaçant, conjointement avec le mécanisme de soudure (1), par rapport à l'objet (2) à souder de sorte à générer une onde ultrasonore de transmission (U, Ui) ;
une source de lumière laser de réception (5) qui est configurée pour générer une lumière laser de réception (Id) afin de détecter une onde ultrasonore réfléchie (U, Ur) obtenue comme résultat de réflexion de l'onde ultrasonore de transmission (U, Ui) ;
un mécanisme optique de réception (10) qui est configuré pour transmettre, pendant ou après l'opération de soudure, la lumière laser de réception générée depuis la source de lumière laser de réception (5) à la surface de l'objet (2) à souder pour l'irradiation tout en se déplaçant, conjointement avec le mécanisme de soudure (1), par rapport à l'objet (2) à souder et collecte de la lumière laser (Ir) diffusée/réfléchie au niveau de la surface de l'objet (2) à souder ;
un interféromètre (6) qui est configuré pour réaliser une mesure d'interférence de la lumière laser diffusée/réfléchie (Ir) ; et
un mécanisme d'enregistrement/d'analyse de données (7) qui est configuré pour mesurer et analyser un signal ultrasonore obtenu par l'interféromètre (6), **caractérisé en ce que**
le système de soudure (30) comprend en outre un mécanisme de modification de surface (14a, 14b) qui est configuré pour améliorer la sensibilité à au moins un du signal ultrasonore généré sur la surface de l'objet (2) à souder sur laquelle la lumière laser de transmission (Ii) est irradiée et d'un signal ultrasonore généré sur la surface de l'objet (2) à souder sur laquelle la lumière laser de réception (Id) est irradiée, et
le mécanisme de modification de surface (14b) est configuré pour appliquer un matériau résistant à haute température (16) sur au moins une partie de la surface de l'objet (2) à souder sur laquelle la lumière laser de transmission (Ii) est irradiée et une partie de la surface de l'objet (2) à souder sur laquelle la lumière laser de réception (Id) est irradiée.

2. Système de soudure (30) selon la revendication 1, dans lequel
le mécanisme de modification de surface (14a, 14b) est configuré pour se déplacer, conjointement avec le mécanisme de soudure (1), par rapport à l'objet (2) à souder et est disposé sur le côté avant de direction de déplacement d'au moins une partie de la surface de l'objet (2) sur laquelle la lumière laser de transmission (Ii) est irradiée et une partie de la surface de l'objet à souder sur laquelle la lumière laser de réception (Id) est irradiée.

3. Système de soudure (30) selon l'une quelconque des revendications précédentes, dans lequel
le mécanisme d'enregistrement/d'analyse de données (7) est configuré pour déterminer l'occurrence d'un défaut de soudure sur la base d'un résultat d'analyse sur un signal ultrasonore, et
le système de soudure (30) est configuré pour changer les conditions de soudure lorsque le mécanisme d'enregistrement/d'analyse de données (7) a déterminé que le défaut de soudure s'est produit.

4. Système de soudure (30) selon l'une quelconque des revendications précédentes, dans lequel
le mécanisme d'enregistrement/d'analyse de données (7) est configuré pour déterminer l'occurrence d'un défaut de soudure sur la base d'un résultat d'analyse sur un signal ultrasonore, et
le système de soudure (30) est configuré pour réaliser une soudure partielle pour la maintenance et la réparation pour un emplacement au niveau duquel le défaut de soudure s'est produit lorsque le mécanisme d'enregistrement/d'analyse de données (7) a déterminé que le défaut de soudure s'est produit.

5. Système de soudure (30) selon l'une quelconque des revendications précédentes, comprenant en outre un entraîneur de système optique (11, 12) qui est configuré pour entraîner le mécanisme optique de transmission (9) et le mécanisme optique de réception (10) de sorte qu'au moins un du mécanisme optique de transmission (9) et du mécanisme optique de réception (10) se déplace le long d'une partie de la surface de l'objet (2) à souder sur laquelle la lumière laser de transmission (Ii) est irradiée et une partie de la surface de l'objet (2) à souder sur laquelle la lumière laser de réception (Id) est irradiée respectivement par rapport au mécanisme de soudure (1) tout en se déplaçant par rapport à l'objet (2) à souder conjointement avec le mécanisme de soudure (1).

6. Système de soudure (30) selon l'une quelconque des revendications précédentes, dans lequel le mécanisme d'enregistrement/d'analyse de données (7) est configuré pour réaliser un traitement de synthèse d'ouverture sur la base des signaux ultrasonores au niveau d'une pluralité de positions du mécanisme optique de transmission (9) et du mécanisme optique de réception (10).

7. Système de soudure (30) selon l'une quelconque des revendications précédentes, comprenant en outre un mécanisme de mesure de température (13) qui est configuré pour mesurer la température de l'objet (2) à souder, dans lequel
le mécanisme d'enregistrement/d'analyse de données (7) est configuré pour corriger la vitesse d'une onde ultrasonore (U) dans l'objet (2) à souder sur la base de la température de l'objet (2) à souder obtenue par le mécanisme de mesure de température (13).

8. Système de soudure (30) selon l'une quelconque des revendications précédentes, comprenant en outre :
un mécanisme de mesure de distance (23) qui est configuré pour mesurer une distance entre le mécanisme optique de transmission (9) et l'objet (2) à souder et une distance entre le mécanisme optique de réception (10) et l'objet (2) à souder ;
un mécanisme d'ajustement de distance configuré pour ajuster la distance entre le mécanisme optique de transmission et l'objet à souder sur la base de la distance mesurée par le mécanisme de mesure de distance (20).

9. Système de soudure (30) selon l'une quelconque des revendications précédentes, comprenant en outre un mécanisme de projection de motif (15) qui est configuré pour projeter un motif prédéterminé (Ip) qui peut être reconnu directement ou indirectement visuellement sur la surface de l'objet (2) à souder dans une plage prédéterminée incluant la position de l'objet (2) à souder sur laquelle la lumière laser de transmission (Ii) ou la lumière laser de réception (Id) est irradiée.

10. Système de soudure (30) selon l'une quelconque des revendications précédentes, comprenant en outre un mécanisme d'affichage (8) qui est configuré pour afficher en temps réel un résultat obtenu comme un résultat d'enregistrement/d'analyse effectué par le mécanisme d'enregistrement/d'analyse de données (7).

11. Système de soudure (30) selon l'une quelconque des revendications précédentes, dans lequel le mécanisme optique de transmission (9) et le mécanisme optique de réception (10) sont couverts par un mécanisme de protection résistant à la chaleur (19) à l'exception d'une portion au travers de laquelle une lumière laser à irradier sur l'objet (2) à souder passe et une portion au travers de laquelle une lumière laser à réfléchir sur l'objet (2) à souder passe.

12. Système de soudure (30) selon l'une quelconque des revendications précédentes, comprenant en outre un mécanisme optique pour un signal de référence (60) qui est configuré pour transmettre pour l'irradiation la lumière laser pour un signal de référence (Iref) à une position d'irradiation de lumière laser pour un signal de référence (Pref) sur une partie de la surface de l'objet (2) à souder qui est différente d'une position d'irradiation de lumière laser de transmission (Pi) sur laquelle la lumière laser de transmission (Ii) est irradiée et une position d'irradiation de lumière laser de réception (Pd) sur laquelle la lumière laser de réception (Id) est irradiée tout en se déplaçant, conjointement avec le mécanisme de soudure (1), par rapport à l'objet (2) à souder de sorte à générer une onde ultrasonore pour un signal de référence (Uref), dans lequel
la lumière laser à collecter par le mécanisme optique de réception (9) est une lumière laser qui a été soumise à la fois à la modulation donnée par une onde ultrasonore réfléchie (Ur) obtenue comme un résultat de diffusion/réflexion de l'onde ultrasonore de transmission (Ui) et la modulation donnée par une onde ultrasonore réfléchie (Uref) obtenue comme un résultat de diffusion/réflexion de l'onde ultrasonore pour un signal de référence (Uref).

13. Système de soudure selon la revendication 12, dans lequel
le mécanisme optique pour un signal de référence (60) assure une fonction de génération de la lumière laser pour un signal de référence (Iref) depuis une partie de la lumière laser de transmission (Ii).

14. Système de soudure (30) selon les revendications 12 ou 13, dans lequel
la position d'irradiation de lumière laser de réception (Pd) et la position d'irradiation de laser pour un signal de référence (Pref) sont disposées sur le même côté par rapport à la ligne de soudure et la position d'irradiation de lumière laser de transmission (Pi) est disposée sur un côté différent par rapport à la ligne de soudure à partir de la position d'irradiation de lumière laser de réception (Pd) et la position d'irradiation laser pour un signal de référence (Pref).

15. Procédé de soudure qui soude un objet (2) à souder tout en déplaçant un mécanisme de soudure (1) le long d'une ligne de soudure par rapport à l'objet (2) à souder, le procédé comprenant :
une étape de génération d'onde ultrasonore de transmission d'irradiation, pendant ou après l'opération de soudure, d'une partie de la surface de l'objet (2) à souder avec une lumière laser de transmission (Ii) générée depuis une source de lumière laser de transmission (4) tout en déplaçant un mécanisme optique de transmission (9), conjointement avec le mécanisme de soudure (1), par rapport à l'objet (2) à souder de sorte à générer une onde ultrasonore de transmission (U, Ui) ;
une étape de détection d'onde ultrasonore réfléchie d'irradiation, pendant ou après l'opération de soudure, d'une partie de la surface de l'objet (2) à souder avec une lumière laser de réception (Id) générée depuis une source de lumière laser de réception (5) tout en déplaçant un mécanisme optique de réception (10), conjointement avec le mécanisme de soudure (1), par rapport à l'objet (2) à souder et de collecte d'une lumière laser (Ir) diffusée/réfléchie au niveau de la surface de l'objet (2) à souder de sorte à détecter une onde ultrasonore réfléchie (U, Ur) obtenue comme un résultat de réflexion de l'onde ultrasonore de transmission (U, Ui) ; et
une étape de mesure d'interférence de réalisation d'une mesure d'interférence de la lumière laser diffusée/réfléchie (Ir), **caractérisé en ce que**
le procédé de soudure comprend en outre, avant l'étape de génération d'onde ultrasonore de transmission, une étape de traitement de modification de surface de réalisation d'un traitement de modification de surface pour améliorer la sensibilité à au moins un du signal ultrasonore généré sur une partie de la surface de l'objet (2) à souder sur laquelle la lumière laser de transmission (li) est irradiée et d'un signal ultrasonore généré sur une partie de la surface de l'objet (2) à souder sur laquelle la lumière laser de réception (Id) est irradiée, et
dans lequel l'étape de traitement de modification de surface comprend l'application d'un matériau résistant à haute température (16) qui peut être abrasé par la lumière laser de transmission ou qui montre une haute réflectivité par rapport à la longueur d'onde de la lumière laser de réception utilisée, sur au moins une partie de la surface de l'objet (2) à souder sur laquelle la lumière laser de transmission (Ii) est irradiée et une partie de la surface de l'objet (2) à souder sur laquelle la lumière laser de réception (Id) est irradiée.

16. Procédé de soudure selon la revendication 15, comprenant en outre :
une étape de calcul de simulation de réalisation d'un calcul de simulation sur une opération de soudure pour l'objet (2) à souder ; et
une étape d'affichage d'affichage d'une comparaison entre un résultat obtenu dans l'étape de calcul de simulation et un résultat obtenu dans l'étape de mesure d'interférence.

17. Procédé de soudure selon les revendications 15 ou 16, dans lequel
l'étape de génération d'onde ultrasonore de transmission inclut une étape de génération de signal de référence d'irradiation avec une lumière laser pour un signal de référence (Iref), pendant ou après l'opération de soudure, d'une position d'irradiation de lumière laser pour un signal de référence (Pref) sur la surface de l'objet (2) à souder qui est différente d'une position d'irradiation de lumière laser de transmission (Pd) dans laquelle la lumière laser de transmission (Ii) est irradiée et une position d'irradiation de lumière laser de réception (Pd) dans laquelle la lumière laser de réception (Id) est irradiée tout en déplaçant un mécanisme optique pour un signal de référence (60), conjointement avec le mécanisme de soudure (1), par rapport à l'objet (2) à souder de sorte à générer un signal de référence, et
l'étape de détection ultrasonore réfléchie inclut une étape de collecte de lumière laser qui a été soumise à la fois à la modulation donnée par une onde ultrasonore réfléchie (Ur) obtenue comme un résultat de diffusion/réflexion de l'onde ultrasonore de transmission (Ui) et la modulation donnée par une onde ultrasonore réfléchie (Uref) obtenue comme un résultat de diffusion/réflexion de l'onde ultrasonore pour un signal de référence (Uref) de sorte à détecter une onde ultrasonore réfléchie (Ur) obtenue comme un résultat de réflexion de l'onde ultrasonore de transmission (Ui).

18. Procédé de soudure selon la revendication 17, dans lequel
l'étape de génération de signal de référence inclut une étape de génération de la lumière laser pour un signal de référence depuis une partie de la lumière laser de transmission générée depuis une source de lumière laser de transmission (4).

19. Procédé de soudure selon la revendication 17 ou 18, dans lequel
la position d'irradiation de lumière laser de réception (Pd) et la position d'irradiation laser pour un signal de référence (Uref) sont disposées sur un même côté par rapport à la ligne de soudure, et la position d'irradiation de lumière laser de transmission (Pi) est disposée sur un côté différent par rapport à la ligne de soudure de la position d'irradiation de lumière laser de réception (Pd) et la position d'irradiation laser pour un signal de référence (Uref).
